(19) Europäisches Patentamt
European Patent Office
Office européen des brevets

(11) EP 4 309 499 A1

(12) EUROPEAN PATENT APPLICATION

(43) Date of publication:
**24.01.2024 Bulletin 2024/04**

(21) Application number: **22186452.3**

(22) Date of filing: **22.07.2022**

(51) International Patent Classification (IPC):
***A01N 25/28*** *(2006.01)* ***A01N 31/02*** *(2006.01)*
***A01N 31/14*** *(2006.01)* ***A01N 37/10*** *(2006.01)*
***A01N 37/36*** *(2006.01)* ***A01P 1/00*** *(2006.01)*

(52) Cooperative Patent Classification (CPC):
(C-Sets available)
**A01N 25/28** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Givaudan SA**
**1214 Vernier (CH)**

(72) Inventor: **The designation of the inventor has not yet been filed**

(74) Representative: **Global Patents**
**Givaudan SA**
**Grafenaustrasse 7**
**6300 Zug (CH)**

# (54) COMPOSITION COMPRISING BIODEGRADABLE MICROCAPSULES

(57) A microcapsule composition comprising a plurality of microcapsules comprising a biodegradable encapsulating material for delivery of functional materials is provided, comprising an anti-microbial preservation system comprising at least one non-partitioning preservation agent. The composition is resistant to microbial growth, as well as microorganism-mediated premature leakage of the functional material during manufacture, distribution and storage, but which when incorporated into a consumer product can deliver functional material in a desirable manner.

EP 4 309 499 A1

(52) Cooperative Patent Classification (CPC): (Cont.)

C-Sets
**A01N 25/28, A01N 31/02, A01N 31/14;**
**A01N 25/28, A01N 31/14;**
**A01N 25/28, A01N 37/10, A01N 37/36**

## Description

The present invention relates to a microcapsule composition comprising a plurality of microcapsules comprising an encapsulated functional material and a biodegradable encapsulating material. The invention also relates to the preservation of such a microcapsule composition to prevent or reduce microbial growth, as well as the use of anti-microbial preservation systems to prevent or reduce the premature leakage of functional material from such a microcapsule composition.

It is known to incorporate encapsulated functional materials, such as fragrance, flavors, cosmetic actives, and substrate enhancers into consumer products, such as household care, personal care and fabric care products, in order to enhance the consumer experience of those products.

Microcapsules are typically presented in the form of so-called core-shell microcapsules. In this form, a core comprising an active ingredient is encapsulated within a shell material. However, microcapsules can also be presented in the form of monolithic particles that typically comprise a functional material dispersed within a matrix of encapsulating material.

Core-shell microcapsule compositions are generally provided in the form of a slurry, that is, a dispersion or suspension of microcapsules in an aqueous medium. If desired, slurries can be dried to provide microcapsule compositions in the form of a powder or cake.

Thermosetting resins, such as aminoplast, polyurea and polyurethane resins, as well as combinations thereof are commonly employed as shell materials in the preparation of core-shell microcapsules. They are particularly valued for their resistance to leakage of functional material when dispersed in aqueous suspending media, even in surfactant-containing media.

Anti-microbial preservation agents are routinely added to core-shell microcapsule compositions based on synthetic thermosetting resins for the sole purpose of avoiding growth of micro-organisms that may be caused by the inadvertent introduction of micro-organisms and food sources thereof during their manufacture, storage or distribution.

The demand from consumer product manufacturers for microcapsule compositions increases, but despite the functional excellence of thermosetting resins, there is a growing consumer preference for microcapsule compositions formed from materials that are more sustainable in terms of the environment and resource protection, which privileges the use of materials sourced from nature, especially biopolymers, and more particularly biodegradable biopolymers that are obtained from natural sources.

WO2020/131855 discloses microcapsule compositions prepared from guar gum, WO2020/131866 discloses microcapsule compositions prepared from polysaccharides, WO2020/131875 and WO2020/131879 disclose microcapsule compositions prepared from proteins, and WO2020/131956 discloses microcapsule composition derived from hydroxyethyl cellulose. Other biodegradable and/or sustainably-sourced microcapsule compositions disclosed in the patent literature, include, but are not limited to, WO2020/209908, WO2020/209907, WO2020/209909, , WO2019/179939, WO2019/243425 and WO2019/243426.

The trend towards the use of sustainable and/or biodegradable materials has created an entirely new challenge in terms of anti-microbial preservation of microcapsule compositions. This is because the biodegradable encapsulating materials useful in the preparation of microcapsules represent a source of food for micro-organisms, catalyzing their growth, which in turn can to lead micro-organism-mediated premature degradation and leakage of the microcapsules. This can be particularly problematic with microcapsule slurries, which can contain upwards of 30 wt.-% water, but it can also be a problem with microcapsule compositions in the form of cakes or powders, which still can contain significant levels of water that can be up to 10 wt.-%, based on the total weight of a microcapsule composition.

Effective preservation is, of course, important for reasons related to product quality or safety, but the applicant also has discovered that anti-microbial preservation has a significant role to play in the containment of functional material and in preventing its release in an uncontrolled or undesirable manner as a result of microbial degradation of encapsulating material.

There remains a need to provide a microcapsule composition, more particularly such composition containing microcapsules comprising biodegradable encapsulating material, which composition is resistant to micro-organism-mediated premature leakage of functional material during its manufacture, distribution and storage, but which is capable of releasing functional material in a desired manner from a consumer product, and which degrades following its use, reducing its persistence in the environment.

In a first aspect, the invention provides a microcapsule composition comprising a plurality of microcapsules, an aqueous phase comprising an anti-microbial preservation system, wherein the microcapsules comprise a biodegradable encapsulating material that encapsulates a functional material, and the anti-microbial preservation system comprises at least one preservation agent, selected from the group consisiting of:

a. carboxylic, hydroxy-carboxylic acids and their conjugate bases;

b. hydroxy esters, such as lactic acid monoesters;

c. alcohols and polyols, such as ethanol, propanol, isopropanol, glycerol, sorbitol, more particularly diols, still more particularly 1,2-diols, such as 1,3-butylene glycol, 1,3-propylene glycol, and 1,2-alkyldiols having 2 to 7 carbon atoms; and mixtures thereof;

d. hydroxypyrones and hydroxylactones, such as dehydroacetic acid and glucono delta-lactone;

e. phenols, phenolic derivatives and polyphenols, such as palmitoyl-epigallocatechin-3-gallate (ex-green tea extracts) and pyrogallol;

f. formaldehyde releasers, such as formaldehyde, imidazolidinyl urea (CAS 39236-46-9), diazolidinyl urea (CAS 78491-02-8), DMDM Hydantoin (1,3-Bis(hydroxymethyl)-5,5-dimethylimidazolidine-2,4-dione, CAS6440-58-0), Bronopol (2-Brom-2-nitro-1,3-propandiol,(CAS 52-51-7); Bronidox (5-Bromo-5-nitro-1,3-dioxane, CAS 30007-47-7);

g. nitrogen-containing compounds, such as Quaternium-15 (1-(3-Chloroallyl)-3,5,7-triaza-1-azoniaadamantane chloride, CAS 4080-31-3), benzalkonium chloride (CAS 8001-54-5), methanamine (CAS 100-97-0), caprylhydroxamic acid, 2-hydroxyethylenamine, sodium hydroxymethylglycinate; and more particularly isothiazolinones and alkaloids, such as caffeine, nicotinamide, N,N-diethylnicotinamide, and N,N-dimethylbenzamide;

h. surfactants selected from cationic surfactants, such as alkylamine salts, for example alkyl esters of the lauramide of arginine monohydrochloride; anionic surfactants, such as such as alkylbenzyl sulfonates, alkyl sulfates, sulfonates and carboxylates; amphoteric surfactants, such as alkylamidobetains and alkylamidoglycinates; non-ionic surfactants having a Hydrophilic Balance (HLB) from 12 to 20, such as fatty acids monoethanolamides, ethoxylated fatty alcohols and alkyl polyglucosides; and C1-C8 alkyl ethers and esters of ethylene oxide oligomers and glycerol oligomers, also known as solvo-surfactants; and

i. quaternized or protonated amines, such as the alkyl esters of the lauramide of arginine monohydrochloride, alkyldimethylbenzylammonium chloride (ADBAC), alkyldimethylethylbenzylammonium chloride (ADEBAC), and didecylammonium chloride (DDAC); and quaternized or protonated amines.

In a second aspect, the invention provides the use of anti-microbial preservation systems to prevent or reduce the premature leakage of encapsulated functional material from a microcapsule composition comprising a biodegradable encapsulating material.

In a third aspect, the invention provides a method of preventing or reducing the premature leakage of encapsulated functional material from a microcapsule composition comprising a biodegradable encapsulating material, said method comprising the step of adding an anti-microbial preservation system to said composition, said anti-microbial preservation system comprising at least one of the preservation agent listed hereinabove.

In a fourth aspect, the invention provides a consumer product having incorporated therein a microcapsule composition as herein defined.

These and other aspects, embodiments and advantages of the invention are described herein below.

The present invention is based on the surprising discovery that despite adding presumed effective amounts of anti-microbial preservation agents to microcapsule slurries, comprising a biodegradable encapsulating material and subjecting them to microbial challenge tests with inoculums of bacteria, yeasts or fungi, certain preservation agents were found to be ineffective in adequately reducing the micro-organism concentrations to acceptable levels, despite the fact that the preservation agents were known to be effective against the micro-organisms contained in inoculums. The problem was even more pronounced when slurries and cakes had been contaminated with micro-organisms after prolonged storage, for example in containers. This resulted in the leakage of part of the encapsulated functional material from the microcapsules, due to the degradation of the microcapsule under the action of these micro-organisms. Without intending to be bound by theory, it is believed that this phenomenon can be explained by the propensity of certain preservation agents to partition from an aqueous continuous phase and into the dispersed microcapsule phase, which is relatively hydrophobic. As a result of partitioning, lower than anticipated concentrations of preservation agent in the aqueous phase can result in undesirable growth of micro-organisms, such as bacteria, yeast, molds and algae, should they be introduced inadvertently into microcapsule compositions. The applicant found that the stability issue could be overcome by employing an anti-microbial preservation system that comprises at least one non-partitioning preservation agent, including but not limited to those preservation agents referred to above, which remains entirely, or substantially, in the aqueous phase external of the microcapsule compositions for a sufficient length of time to prevent premature leakage.

The aqueous phase may be present in the form of a continuous liquid phase in which the microcapsules are

dispersed in the form a slurry, or it may be present in interstices or voids that are present within the biodegradable encapsulating material.

The applicant found that conventional preservation agents that are generally recognized as effective, such as phenoxyethanol, benzoic acid and p-hydroxybenzoic esters, were unable, when used alone, to prevent the biological contamination of microcapsule compositions over time, for example over a time period of one month or more, more particularly three months or more, even more particularly six months or more, and still more particularly twelve months or more. Microcapsule compositions that comprise a biodegradable encapsulating material and which contain such conventional preservation agents generally do not pass microbial challenge tests described herein, and are thereby susceptible to premature leakage.

By "premature leakage" is meant leakage that occurs before it is desirable for the microcapsule composition to release its core contents, in particular, before the composition is incorporated into a consumer product composition, for example during the composition's manufacture, distribution or storage.

The issue was particularly pronounced with benzoic acid, under acidic conditions, for example at pH lower than 6, which is the pH range where this agent is conventionally considered effective as a preservation agent.

Conversely, preservation systems comprising at least one non-partitioning preservation agent can effectively reduce or eliminate leakage of microcapsule compositions comprising a biodegradable encapsulating material in the presence of water. More particularly the applicant has found that such preservation systems are compliant with microbial challenge tests and provide long-term preservation against biological contamination and prevent premature microcapsule degradation and leakage mediated by micro-organisms.

In an embodiment of the present invention, a non-partitioning preservation agent is a preservation agent that is characterized in that less than 25 wt.-%, more particularly less than 20 wt.-%, more particularly less than 15 wt.-%, more particularly less than 10 wt.-%, more particularly less than 5 wt.-% of the agent added to the aqueous phase of a microcapsule slurry will partition into the microcapsules when stored at a temperature of 25 °C for 1 month.

The propensity of a preservation agent to partition may be measured by analytical means known in the art. More particularly, the microcapsules may be separated from the aqueous phase by centrifugation, ultra-centrifugation, flotation or filtration and the level of preservation agent present in the aqueous phase may be determined by any suitable analytical method, such as gas-liquid and liquid-liquid chromatography, and spectroscopic techniques. More particularly, the application of a suitable analytical method may be preceded by an extraction step, wherein the preservation agent is separated from the aqueous phase. Suitable extraction means include contacting the aqueous phase with a water-immiscible solvent or a supercritical fluid. Alternatively, the microcapsules may be included in a dialysis tube and the tube immersed in an aqueous phase comprising the preservation agent and the system may be allowed to equilibrate for any period of time before the level of preservation agent is determined in the aqueous phase as mentioned hereinabove.

As stated herein above, the invention in its first aspect provides a microcapsule composition comprising a plurality of microcapsules, an aqueous phase comprising an anti-microbial preservation system, wherein the microcapsules comprise a biodegradable encapsulating material that encapsulates a functional material, and the anti-microbial preservation system comprises at least one non partitioning preservation agent.

Suitable non-partitioning preservantion agents may be selected from:

a) carboxylic, hydroxy-carboxylic acids and their conjugate bases;

b) hydroxy esters, such as lactic acid monoesters;

c) alcohols and polyols, such as ethanol, propanol, isopropanol, glycerol, sorbitol, more particularly diols, still more particularly 1,2-diols, such as 1,3-butylene glycol, 1,3-propylene glycol, and 1,2-alkyldiols having 2 to 7 carbon atoms; and mixtures thereof;

d) hydroxypyrones and hydroxylactones, such as dehydroacetic acid and glucono delta-lactone;

e) phenols, phenolic derivatives and polyphenols, such as palmitoyl-epigallocatechin-3-gallate (ex-green tea extracts) and pyrogallol;

f) formaldehyde releasers, such as formaldehyde, imidazolidinyl urea (CAS 39236-46-9), diazolidinyl urea (CAS 78491-02-8), DMDM Hydantoin (1,3-Bis(hydroxymethyl)-5,5-dimethylimidazolidine-2,4-dione, CAS6440-58-0), Bronopol (2-Brom-2-nitro-1,3-propandiol,(CAS 52-51-7); Bronidox (5-Bromo-5-nitro-1,3-dioxane, CAS 30007-47-7);

g) nitrogen-containing compounds, such as Quaternium-15 (1-(3-Chloroallyl)-3,5,7-triaza-1-azoniaadamantane chloride, CAS 4080-31-3), benzalkonium chloride (CAS 8001-54-5), methanamine (CAS 100-97-0), caprylhydroxamic acid, 2-hydroxyethylenamine, sodium hydroxymethylglycinate; and more particularly isothiazolinones and alkaloids, such as caffeine, nicotinamide, N,N-diethylnicotinamide, and N,N-dimethylbenzamide;

h) surfactants selected from cationic surfactants, such as alkylamine salts, for example alkyl esters of the lauramide of arginine monohydrochloride; anionic surfactants, such as such as alkylbenzyl sulfonates, alkyl sulfates, sulfonates and carboxylates; amphoteric surfactants, such as alkylamidobetains and alkylamidoglycinates; non-ionic surfactants having a Hydrophilic Balance (HLB) from 12 to 20, such as fatty acids monoethanolamides, ethoxylated fatty alcohols and alkyl polyglucosides; and C1-C8 alkyl ethers and esters of ethylene oxide oligomers and glycerol oligomers, also known as solvo-surfactants;

i) quaternized or protonated amines, such as the alkyl esters of the lauramide of arginine monohydrochloride, alkyldimethylbenzylammonium chloride (ADBAC), alkyldimethylethylbenzylammonium chloride (ADEBAC), and didecylammonium chloride (DDAC); and quaternized or protonated amines;

In particular embodiments of the first aspect of the invention: -

a) the weight ratio of the carboxylic and hydroxycarboxylic acids and their conjugate bases to the microcapsules is from 0.0005 to 0.4, more particularly from 0.001 to 0.2.

b) the weight ratio of the alcohols and polyols, more particularly diols, still more particularly 1,2-diols to the microcapsules is from 0.001 to 0.4, more particularly from 0.005 to 0.2;

c) the weight ratio of the hydroxy esters, such as lactic acid monoesters, to the microcapsules is from 0.0001 to 0.02, more particularly from 0.0005 to 0.004;

d) the weight ratio of the hydroxypyrones and hydroxylactones to the microcapsules is from 0.0005 to 0.1, more particularly from 0.001 to 0.04;

e) the weight ratio of the phenols, phenolic derivatives and polyphenols to the microcapsules is from 0.0005 to 0.1, more particularly from 0.001 to 0.04; and

f) the weight ratio of the formaldehyde releasers to the microcapsules is from 0.0001 to 0.04, more particularly from 0.0005 to 0.02;

g) the weight ratio of the nitrogen-containing compound, more particularly isothiazolinones and alkaloids to the microcapsules, is from 0.000005 to 0.00004, more particularly from 0.00001 to 0.00002;

h) the weight ratio of the surfactant to the microcapsules is from 0.001 to 0.2, more particularly from 0.01 to 0.1;

i) the weight ratio of the quaternized or protonated amines to the microcapsules is from 0.0005 to 0.05, more particularly from 0.001 to 0.02;

wherein the weight of the microcapsules as used herein is based on the solids content of the microcapsule composition.

In the context of the present invention, the solids content is measured by using a thermo-balance operating at 120 °C. The solids content, expressed as weight percentage of the initial microcapsule composition deposited on the balance was taken at the point where the drying-induced rate of weight change had dropped below 0.1 %/min.

In particular embodiments of the present invention, the at least one preservation agent is selected from any one of groups b) to f), is non-ionic and has calculated octanol/water partition coefficient (ClogP) of 1.0 or less, more particularly 0.5 or less, still more particularly 0.0 or less, still more particularly -0.5 (minus 0.5) or less.

In particular embodiments of the present invention, the at least one non-ionic preservation agent is selected from diols, more particularly a 2-methyl-2,4-pentanediol (ClogP=-0.02) and 1,2-alkyldiols, such as 1,2-propanediol (ClogP=-1.06), 1,2-butanediol (ClogP=-0.53), 1,2-pentanediol (ClogP=-0.002); and 1,2-hexanediol (ClogP=0.53).

In particular embodiments of the present invention, the at least one preservation agent is a conjugate acid-base pair. The conjugate acid-base pair may be derived from a weak acid or from the salt of a weak acid, provided the weak acid in its protonated form has a ClogP of 1.00 or less, more particularly 0.50 or less, still more particularly 0.00 or less, still more particularly -0.50 or less.

In the context of the present invention, the ClogP values of the preservation agent are calculated by using the ClogP calculation method implemented in ChemDraw versions 19. ChemDraw is part of the ChemOffice platform, commercialized by Perkin Elmer.

A conjugate acid-base pair is a protonated acid (acid moiety) that is in equilibrium with its deprotonated form (base moiety).

Known weak acids having, in the protonated form, a ClogP of 1.00 or less, still more particularly 0.50 or less, still more particularly 0.00 or less, still more particularly -0.50 or less include but are not limited to ascorbic acid (ClogP=-1.76), citric acid (ClogP=-2.00), malic acid (ClogP=-1.52), lactic acid (ClogP=-0.73), glycolic acid (ClogP=-1.04); levulinic acid (ClogP=-0.34), gluconic acid (ClogP=-3.10), phytic acid (ClogP=-8.80), glutamic acid N,N-diacetic acid (GLDA) (ClogP=-1.22), ethylenediaminetetraacetic acid (EDTA) (ClogP=-1.93), hydroxymethyl amino acetic acid (ClogP=-2.81), and C1-C5 carboxylic acids, such as formic acid (ClogP=-0.54), acetic acid (ClogP=-0.194), propionic acid (ClogP=0.34), and butanoic acid (ClogP=0.86).

In particular embodiments of the present invention, the conjugate acid-base pair is derived from a weak acid selected from the group consisting of ascorbic acid, citric acid, malic acid, lactic acid, glycolic acid, levulinic acid, gluconic acid, phytic acid, glutamic acid N,N-diacetic acid (GLDA), ethylenediaminetetraacetic acid (EDTA), caprylhydroxamic acid, and hydroxymethyl amino acetic acid. These weak acids are preferred because of their high solubility in water and low odour.

Known salts of weak acids include the salts of aromatic carboxylic acids, saturated and unsaturated alkyl carboxylic acids, and hydroxy acids with monovalent alkaline metals and silver.

In particular embodiments of the present invention, the conjugate acid-base pair is derived from the salt of a weak acid selected from the group consisting of lithium, sodium potassium, or ammonium ascorbates, citrates, malates, lactates, levulinates, gluconates, phytates, glutamate-N,N-diacetates, ethylenediamine-tetraacetates, caprylhydroxamates, and hydroxymethyl amino acetic acetates.

The applicant has also found that, whereas using one conjugate acid-base pair is sufficient to provide microcapsule compositions with enhanced stabilization against biological degradation compared to conventional preservation agents, combining different conjugate acid-base pairs or combining conjugate acid-base pairs with one or more of the non-partitioning preservation agents b. to i). mentioned hereinabove may lead to a more performing preservation system.

The molar ratio of both acid (e.g. non-ionized) and base (e.g. ionized) moieties in a conjugate acid-base pair in the microcapsule composition controls the pH of the composition, according to the principle of buffer solutions, as expressed by the Henderson-Hasselbach equation:

$$pH = pK_a + \log([A^-]/[HA])$$

wherein the term $pK_a$ is the negative log of the acid dissociation constant or Ka value of the weak acid involved in the conjugate acid-base pair, $[A^-]$ is the molar concentration of the conjugate base moiety and [HA] is the molar concentration of the conjugate acid moiety.

This is also true for combinations of different weak acids and salts of weak acids, such as for instance combinations of ascorbic acid and potassium sorbate, sorbic acid and potassium ascorbate, formic acid and sodium lactate, or citric acid and sodium glycolate. Thus, different preservation agents, comprising different conjugate acid-base pairs, may be used in the context of the present invention.

The molar ratio of both acid and base moieties may be controlled by adding a strong Bronstedt acid, such as hydrochloric acid, to a solution of any of the salt of weak acid mentioned hereinabove, or by adding a strong Bronstedt base to a weak acid.

The efficacy of a preservation system comprising one or more conjugate acid-base pairs may be associated with the presence of the acid (e.g. non-ionized) moiety of the conjugate acid-base pair. The efficacy may be optimal at acidic pH, in particular at pH lower than 7, more particularly lower than 6, still more particularly lower than 5.

The non-partitioning conjugate acid-base pairs mentioned hereinabove may be combined with conjugate acid-base pairs of partitioning carboxylic acids having, in their protonated form, a solubility in deionized water of 0.5 g/L or more at 25 °C, such as sorbic acid, benzoic acid, 2-hydroxybenzoic acid, 4-hydroxybenzoic acid and 4-methoxybenzoic acid, and their conjugated base lithium, sodium or potassium sorbate, benzoates, 2-hydroxybenzoates, 4-hydroxybenzoate and 4-methoxybenzoates.

The preservation agents referred to herein above may be used alone or in combination.

The at least one non partitioning preservation agent mentioned hereinabove may also be combined with at least one partitioning preservation agent having a solubility in deionized water of more than 1 g/l at 25 °C, such as benzyl alcohol, phenyl ethyl alcohol, and phenoxyethanol.

In preferred embodiments, the anti-microbial preservation system comprises at least one non-partitioning preservation agent selected from i) lactic acid and potassium sorbate, ii) lactic acid and sodium benzoate, iii) 1,2-alkanediol having a ClogP value of less than 1 and phenoxyethanol, iv) gluconic acid and potassium sorbate, and v) 1,2-alkanediol, dehydroacetic acid, benzyl alcohol and phenoxyethanol.

The non-partitioning preservation agent may also be provided in the form of a natural extract. Such natural

extracts include cornelian cherry extract, containing high levels of carboxylic acids; cranberry extract, containing high amounts of benzoic acid and lower amounts of 2,4-dihydroxybenzoic acid, p-hydroxybenzoic, and o-hydroxybenzoic acids; bilberry extract, black currant extract, açaí extract, nettle extract and elderberry extract, containing high amounts of phenols and polyphenols.

The efficiency of green tea extract, comprising the non-partitioning palmitoyl-epigallocatechin-3-gallate preservation agent may be enhanced by combination of the extract with cationic surfactants or conjugate acid-base pairs, such as ascorbic acid and sodium ascorbate.

The level of anti-microbial preservation system in a given microcapsule composition may strongly depend on the efficiency of this anti-microbial preservation system in this microcapsule composition and may have to be determined empirically.

In particular embodiments, anti-microbial preservation systems resulting from combinations such as i) lactic acid and potassium sorbate, ii) lactic acid and sodium benzoate, iii) sorbic acid, potassium sorbate and benzyl alcohol, iv) 1,2-pentanediol and phenoxyethanol, and v) gluconic acid and potassium sorbate are typically employed at a level of from 0.01 wt.-% to 5 wt.-%, more particularly from 0.05 wt.-% to 2.5 wt.-%, still more particularly from 0.1 to 2 wt.-%, based on the total weight of the microcapsule composition.

The pH of the aqueous phase of the microcapsule composition is typically from 2 to 9, more particularly from 3 to 8.

In preferred embodiments, the pH of the aqueous phase of a microcapsule composition containing an acid-base pair is typically from 2 to 7, more particularly from 3.5 to 6, because conjugate acid-base pairs have been found to be more efficient against the full spectrum of microorganisms mentioned hereinabove within this pH range.

As stated above, microcapsules formed from biodegradable encapsulating materials referred to herein can represent a source of food for, and be degraded by, micro-organisms. A micro-organism can be any bacteria, yeast, mold, and algae that may grow in and contaminate an aqueous medium. The growth of micro-organisms in a product, such as a microcapsule slurry, can be assessed by performing a so-called Challenge Test, wherein the product is inoculated with Gram negative bacteria, such as *Escherichia coli* and *Pseudomonas aeruginosa,* Gram positive bacteria, such as *Staphylococcus aureus and Bacillus amyloliquefaciens,* yeast, such as *Aspergillus niger and Cephaloascus Albidus,* and mold, such as *Candida albicans.*

The term "biodegradable", as it is used herein in relation to the encapsulating material means that the encapsulating material is capable of and/or do undergo degradation by physical, chemical, thermal or biological processes in a natural environment. Ultimate biodegradation is achieved when the encapsulating material has been entirely degraded into constitutive building blocks, such as water, carbon dioxide, hydrogen sulfide and ammonia. Practically, biodegradability may be assessed by methods known the art, such as the methods of the OECD Guidelines for testing chemicals, as described in more details hereinafter.

In the context of the present invention, the encapsulating materials preferably meet the pass criteria for "Inherently Biodegradable" and/or "Readily Biodegradable" material in at least one OECD biodegradation test. In order to avoid any ambiguity, this means that a pass in one test, but not in one or more others, is a pass and encapsulating material is deemed to be biodegradable.

The term "Ultimate Biodegradability" used in the OECD tests refers to the complete breakdown of a material into water, carbon dioxide and new biomass, as mentioned hereinabove.

For assessment of the pass criteria for "Readily Biodegradable", the biodegradation study can be selected from the group consisting of OECD Method 301C, OECD Method 301D, OECD Method 301F and OECD Method 310. The Method 301F is particularly suitable for non-volatile materials, such as polymers.

OECD Method 301C, OECD Method 301D and OECD Method 301F are described in the OECD Guidelines for the Testing of Chemicals, Section 3, Test No. 301: Readily Biodegradability (Adopted: 17th July 1992; https://doi.org/10.1787/9789264070349-en).

OECD Method 310 is described in the OECD Guidelines for the Testing of Chemicals, Section 3, Test No. 310: Readily Biodegradability - CO2 in sealed vessels (Headspace Test) (Adopted: 23 March 2006; Corrected: 26 September 2014; https://doi.org/10.1787/9789264016316-en).

In a particular aspect of the present invention, the pass criteria for "Readily Biodegradable" are assessed according to OECD Method 301F, which refers to manometric respirometry. In this method the pass level for "Readily Biodegradable" is to reach 60 % of theoretical oxygen demand and/or chemical oxygen demand. This pass value has to be reached in a 10-day window within the 28-day period of the test. The 10-day window begins when the degree of biodegradation has reached 10% of theoretical oxygen demand and/or chemical oxygen demand and must end before day 28 of the test.

If a positive result is achieved in a test of "Readily Biodegradable", it may be assumed that the test material will undergo rapid and Ultimate Biodegradation in the environment (as further described in the Introduction to the OECD Guidelines for the Testing of Chemicals, Section 3, Part 1: Principles and Strategies Related to the Testing of Degradation of Organic Chemicals; Adopted: July 2003).

For assessment of the pass criteria for "Inherently Biodegradable", the biodegradation study employed can be

OECD Method 302C, but also OECD Method 301F can be used, although with different pass criteria.

OECD Method 302C is described in the OECD Guidelines for the Testing of Chemicals, Section 3, Test No. 302C: Inherent Biodegradability: Modified MITI Test (II) (Adopted: 12 May 1981; Corrected 8 September 2009; https://doi.org/10.1787/9789264070400-en).

In a particular aspect of the present invention, the pass criteria for "Inherently Biodegradable" are assessed by OECD Method 302C. In this method the pass level for "Inherently Biodegradable" is then to reach 70 % of theoretical oxygen demand. There is no time limit to reach this level.

Biodegradation rates above 70 % may be regarded as evidence of inherent, ultimate Biodegradability, meaning that the test material will undergo complete biodegradation to to CO2, biomass, H2O and other inorganic substances like NH3 (OECD Guidelines for the Testing of Chemicals, Section 3, Part 1: Principles and Strategies Related to the Testing of Degradation of Organic Chemicals; Adopted: July 2003).

If OECD Method 301F is used for assessment of the pass criteria for "Inherently Biodegradable", the pass level is 60 % of theoretical oxygen demand and/or chemical oxygen demand. This pass value can be reached after the 28-day period of the test, which is usually extended to 60 days. No 10-day window applies.

The biodegradable encapsulating material in the microcapsule composition may comprise biopolymers and biodegradable synthetic polymers.

Biopolymers useful in the formation of microcapsule compositions according to the present invention can be any polymer that is obtained or derived from a natural source, such as plant, fungus, bacterium, algae or animal sources that may be native, i.e. unmodified from their natural state, or chemically modified, and which is capable of forming an encapsulating matrix or shell around a functional material.

In preferred embodiments of the present invention, the biodegradable encapsulating material comprises at least one biopolymer selected from polysaccharides, such as starch, dextrin, maltodextrin, amylopectins, glycogen, phytoglycogen, dextran, guar gum, locus bean gum, pectin, gum Arabic, gellan gum, xanthan gum, alginate, hyaluronic acid, and chitosan; modified polysaccharides; polyphenolic compounds such as lignins, modified lignins and tannic acids; proteins and polypeptides, such as gelatin, whey proteins, pea proteins, soy proteins, caseins and albumins; modified proteins; and mixtures thereof.

The polysaccharides and modified polysaccharides may be selected from the group consisting of:

- polysaccharide comprising alpha (1 $\rightarrow$ 4) linked monosaccharide units, preferably additionally comprising (1 $\rightarrow$ 6), (1 $\rightarrow$ 3) and/or (1 $\rightarrow$ 2) linked monosaccharide units, selected from the group consisting of starch, such as corn starch, potato starch, tapioca starch, dextrin, maltodextrin, amylopectins, glycogen, phytoglycogen, dextran, enzymatically branched starches, and octenyl succinic anhydride (OSA)-modified starch;

- polysaccharide comprising beta (1 $\rightarrow$ 4) linked monosaccharide units, such as nanocellulose, preferably cellulose derivatives, in particular selected from the group consisting of xyloglucan, gallactomanans, such as guar gum, locus bean gum, and cassia gum, methyl cellulose, hydroxyethyl cellulose, hydroxypropylmethyl cellulose, and (hydrolyzed) cellulose acetate;

- polysaccharide comprising alpha (1 $\rightarrow$ 4) or beta (1 $\rightarrow$ 4) linked monosaccharide units, additionally comprising carboxylic acid groups, selected from the group consisting of from pectin, gum acacia, octenyl succinic anhydride (OSA)-modified gum acacia, gellan gum, xanthan gum, alginate, and hyaluronic acid, and sulfate groups, selected from the group consisting of kappa-carrageenan, iota-carrageenan and lambda-carrageenan;

- polysaccharide comprising beta (1 $\rightarrow$ 4) linked D-glucosamine and N-acetyl-D-glucosamine, preferably selected from the group comprising chitosan and chitosan pyrrolidone carboxylate; and

- Polysaccharide comprising alpha (1 $\rightarrow$ 4) or beta (1 $\rightarrow$ 4) linked monosaccharide units, additionally comprising cationic groups selected from protonated amines, and tertiary amines, such as cationic guar gum.

Lignins may be selected from the group consisting of lignin sulfonates, lignin hydrolysates and lignin nanoparticles.

Tannic acid consists of molecules with 2-12 galloyl moieties surrounding a glucose center.

Suitable proteins include but are not limited to gelatin, preferably Type B gelatin; whey protein, pea protein, soy protein, casein, rice protein, wheat protein, egg protein, barley protein, brown rice protein, pumpkin seed protein, oat protein, potato protein, almond protein, and albumin, for instance bovine serum albumin, and mixtures thereof.

These proteins may be used in their native form or in denaturated form. Protein denaturation usually involves changes in the secondary, tertiary and quaternary structure of the protein, transforming a highly functional and specialized macromolecule into a material that can be employed in a broad range of applications. It is well known that denaturation

may be induced by the action of, for example, temperature, pH, ionizing radiation, shear stresses, water structure destroying agents and detergents. The proteins may be isolated by known processes, such as extraction and centrifugation.

Microcapsule encapsulating material may be formed of a single type of biopolymer, or a combination of biopolymers disclosed herein.

Examples of biopolymers useful as encapsulating materials in the formation of microcapsules for the purpose of the present invention include those disclosed in published patent applications WO2020/209907; WO2020/209908; WO2020/209909; WO2020/131866; WO2016/185171; US2015/0164117; WO2016/193435; US2017/0360676; WO2019/179939; WO2019/243425; and WO2019/243426. Biopolymers or modified biopolymers disclosed in these publications and which are useful encapsulating materials include silk proteins (sericin and fibroin), gum Arabic, soy protein, whey protein, milk proteins, sodium caseinate, calcium caseinate, casein, gelatin, bovine serum albumin, ovalbumin, beta-lactoglobulin, hydrolyzed proteins, gluten, pea proteins, plant storage protein, Purolan Sericin (INCI Name: hydrolyzed sericin), pseudocollagen (INCI Name: Yeast Extract), Biopolymer SA-N (INCI Name: hyaluronic acid (and) albumen (and) dextran sulfate) chitin, chitosan, starch, octenyl succinic acid anhydride modified starch, gum arabic, xanthan gum, gellan gum, pectin gum, konjac gum, carboxy alkyl cellulose, dextran, dextrin, cellulose, modified cellulose. hemicellulose, pectins, lignin and tannic acid.

Synthetic polymers that are biodegradable may also be useful in the present invention. Such biodegradable synthetic polymers include polyesters, such as polyhydroxycarboxylic acids and polyhydroxyalkanoates, and polyester co-polymers, such as poly(ester-co-urea), poly(ester-co-urethane), poly(ester-co-amide), polythioesters, polyorthoesters, poly(hydroxyurethanes), polyanhydrides, and poly(urea-alkylsiloxane).

Irrespective of the type of microcapsule employed (i.e. core-shell or matrix-type) or of the nature of the polymer that is used as encapsulating material in the formation of microcapsule compositions of the present invention, in order to achieve a desired balance between functional material retention during manufacture, distribution and storage, and its release profile in application in a consumer product, the polymer used in microcapsule formation may be cross-linked with one or more cross-linking agents suitable for such purpose.

A cross-linking agent or cross-linker refers to a substance that induces or forms a cross-link. A cross-linking agent of use in this invention may be monofunctional (containing only one reactive group) or polyfunctional (containing more than one reactive group). Moreover, in some embodiments, the cross-linking agent may provide one type of linkage, whereas in other embodiments, the cross-linking agent may provide for more than one type of linkage. Accordingly, in some embodiments, the cross-linking agent is hetero-functional, e.g., hetero-bifunctional. Examples of cross-linking agents of use in this invention include, but are not limited to, aldehydes, epoxy compounds, polyvalent metal cations, polyphenols, maleimides, sulfides, phenolic oxides, hydrazides, isocyanates, isothiocyanates, N-hydroxysulfosuccinimide derivatives, carbodiimide derivatives, sugars, polyols such as sugar alcohols, amines, enzymes, or a combination thereof.

In certain embodiments, the aldehyde cross-linkers are polyfunctional aldehydes that include the difunctional aldehydes already mentioned hereinabove, as well as malondialdehyde, succinic dialdehyde, 1,3-propane dialdehyde, 1,4-butane dialdehyde, 1,5-pentane dialdehyde, and 1,6-hexane dialdehyde; as well as compounds such as glyoxyl trimer and paraformaldehyde, bis (dimethyl) acetal, bis (diethyl) acetal, polymeric dialdehydes, such as oxidized starch.

As a cross-linker, an "epoxy compound" contains a hydroxyl group or ether bond, either in its original form or having such a group or bond formed upon undergoing the cross-linking reaction. Examples of suitable epoxy, also referred to as polyglycidyl ether, cross-linkers include, e.q.f1, 4-butanediol diglycidyl ether (BDDE) , ethylene glycol diglycidyl ether (EGDGE), 1,6-hexanediol diglycigyl ether, polyethylene glycol diglycidyl ether, propyleneglycol diglycidyl ether, polypropylene glycol diglycidyl ether, polytetramethylene glycol digylcidyl ether, neopentyl glycol digylcidyl ether, polyglycerol polyglycidyl ether, diglycerol polyglycidyl ether, glycerol polyglycidyl ether, hexanediolglycidyl ether, trimethylolpropane polyglycidyl ether, pentaerythritol polyglycidyl ether, sorbitol polyglycidyl ether, phthalic acid diglycidyl ester, adipinic acid diglycidyl ether, glycidol, or a combination thereof.

A polyvalent metal cation of use as a cross-linker of this invention is derived preferably from singly or multiply charged cations, the singly charged in particular from alkali metals such as potassium, sodium, lithium. Preferred doubly charged cations are derived from zinc, beryllium, alkaline earth metals such as magnesium, calcium, strontium. Further cations applicable in the invention with higher charge are cations from aluminium, iron, chromium, manganese, titanium, zirconium and other transition metals as well as double salts of such cations or mixtures of the named salts.

Polyphenol cross-linkers of use in this invention have at least two or more hydroxyphenyl groups. Examples of suitable polyphenol cross-linkers include, but are not limited to, a flavonoid, isoflavonoid, neoflavonoid, gallotannin, ellagotannin, DL-3, 4-dihydroxyphenylalaline, phloroglucinol, a phenolic acid such as gallic acid or tannic acid, phenolic ester, phenolic heteroside, curcumin, polyhydroxylated coumarin, polyhydroxylated lignan, neolignan or a combination thereof. In certain embodiments, the polyphenol cross-linker is a phenolic acid having a 3,4,5-trihydroxyphenyl group or 3,4-dihydroxyphenyl group. A preferred polyphenol is tannic acid.

A bismaleimide refers to a compound having two maleimide groups, where the two maleimide groups are

bonded by the nitrogen atoms via a linker. Examples of such crosslinkers carrying maleimide groups are succinimidyl N-maleimidobenzoate (SMB), sulfosuccinimidyl N-maleimidobenzoate (sulfo-SMB), succinimidyl 4-(N-maleimidomethyl) cyclohexane-1-carboxylate (SMCC), sulfosuccinimidyl 4-(N-maleimidomethyl) cyclohexane-1-carboxylate (sulfo-SMCC), succinimidyl 4-(p-maleimidophenyl) butyrate (SMPB), sulfosuccinimidyl 4-(p-maleimidophenyl) butyrate (sulfo-SMPB), bis-maleimidohexane (BMH), N-(4-diazophenyl) maleimide and N-(b-diazophenylethyl) maleimide.

The terms "isocyanate," "polyfunctional isocyanate," and "polyisocyanate" are used interchangeably herein and refer to a compound having two or more isocyanate (-NCO) groups. Polyisocyanates can be aromatic, aliphatic, linear, branched, or cyclic. In some embodiments, the polyisocyanate contains, on average, 2 to 4 isocyanate groups. In particular embodiments, the polyisocyanate contains at least three isocyanate functional groups. In certain embodiments, the polyisocyanate is water insoluble.

In particular embodiments, the polyisocyanate used in this invention is an aromatic polyisocyanate. Desirably, the aromatic polyiso-cyanate includes a phenyl, tolyl, xylyl, naphthyl or diphenyl moiety as the aromatic component. In certain embodiments, the aromatic polyisocyanate is a polyisocyanurate of toluene diisocyanate, a trimethylol propane-adduct of toluene diisocyanate or a trimethylol propane-adduct of xylylene diisocyanate.

Other examples of the aromatic polyisocyanate include 1,5-naphthylene diisocyanate, 4,4'-diphenylmethane diisocyanate (MDI), hydrogenated MDI (H12MDI), xylylene diisocyanate (XDI), tetramethylxylol diisocyanate (TMXDI), 4,4'-diphenyldimethylmethane diisocyanate, di- and tetraalkyldiphenylmethane diisocyanate, 4,4'-dibenzyl diisocyanate, 1,3-phenylene diisocyanate, 1,4-phenylene diisocyanate, the isomers of tolylene diisocyanate (TDI), 4,4'-diisocyanatophenylperfluoroethane, phthalic acid bisisocyanatoethyl ester, and combinations thereof.

In particular embodiments, as already mentioned hereinabove, the polyisocyanate used in this invention is a trifunctional alkylaromatic isocyanate, such as the aforementioned adduct of 2-ethylpropane-1,2,3-triol with 1-isocyanato-3-(isocyanatomethyl)benzene commercially under the trade names Takenate D-110N (ex Mitsui Chemicals) or Quix 175 (ex Covestro).

Polyisocyanate sold under the trademark TAKENATE® D-110N and other polyisocyanates are commercially available, typically in an ethyl acetate solution. Preferably, ethyl acetate is replaced with a solvent having a high flash point (e.g., at least 100°C, at least 120°C, and at least 150 °C). Suitable solvents include triacetin, triethyl citrate, ethylene glycol diacetate, benzyl benzoate, and combinations thereof.

By way of illustration, a trimethylol propane-adduct of xylylene diisocyanate solution in ethyl acetate, which is sold under the trademark TAKENATE® D-110N, is combined with benzyl benzoate and vacuum distilled to remove ethyl acetate to obtain a polyisocyanate solution containing about 59 wt.-% of the trimethylol propane-adduct of xylylene diisocyanate solution and 41 wt.-% of benzyl benzoate. This polyisocyanate solution has a flash point of at least 60 °C. This polyisocyanate solution in benzyl benzoate, together with polyvinylpyrrolidone/polyquaternium-11 or sulfonated polystyrene/carboxymethyl cellulose can be used to prepare the microcapsule composition of this invention.

In other particular embodiments, the polyisocyanate is an aliphatic polyisocyanate such as a trimer of hexamethylene diisocyanate, a trimer of isophorone diisocyanate, and a biuret of hexamethylene diisocyanate. Exemplary aliphatic polyisocyanates include those sold under the trademarks BAYHYDUR® N304 and BAYHYDUR® N305, which are aliphatic water-dispersible polyisocyanates based on hexamethylene diisocyanate; DESMODUR® N3600, DESMODUR® N3700, and DESMODUR® N3900, which are low viscosity, polyfunctional aliphatic polyisocyanates based on hexamethylene diisocyanate; and DESMODUR® 3600 and DESMODUR® N100 which are aliphatic polyisocyanates based on hexamethylene diisocyanate, each of which is available from Covestro. More examples include 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane, chlorinated and brominated diisocyanates, phosphorus- containing diisocyanates, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, and combinations thereof. Sulfur-containing polyisocyanates are obtained, for example, by reacting hexamethylene diisocyanate with thiodiglycol or dihydroxydihexyl sulfide. Further suitable diisocyanates are trimethylhexamethylene diisocyanate, 1,4-diisocyanatobutane, 1,2-diisocyanatododecane, dimer fatty acid diisocyanate, and combinations thereof.

Polyfunctional amines include naturally occurring amino acids such as lysine, histidine, arginine, nontoxic derivatives or family members of lysine, histidine or arginine and mixtures thereof as well was guanidine amines and guanidine salts. Exemplary guanidine amines and guanidine salts include, but are not limited to, 1,3-diaminoguanidine monohydrochloride, 1,1-dimethylbiguanide hydrochloride, guanidine carbonate and guanidine hydrochloride. Polyamine compounds include for example ethylenediamine, diethylenetriamine, triethylenetetraamine, tetraethylenepentaamine, penta-ethylenehexaamine and polyimines. In some embodiments, the amine is lysine. In other embodiments, the amine is guanidine carbonate.

Polyaziridine compounds include 2,2-bishydroxymethylbutanol-tris [3-(1-aziridinyl) propionate], 1,6-hexamethylenediethyleneurea and diphenylmethane-bis-4,4'-N,N'-diethyleneurea.

Halogen epoxides include for example epichloro- and epibromohydrin and a-methylepichlorohydrin.

Alkylenecarbonates include 1,3-dioxolane-2-one (ethylene carbonate), 4-methyl-1,3-dioxolane-2-one (propylene carbonate), 4,5-dimethyl-1,3-dioxolane-2-one, 4,4-dimethyl-1,3-dioxolane-2-one, 4-ethyl-1,3-dioxolane-2-one, 4-hydroxymethyl-1,3-dioxolane-2-one, 1,3-dioxane-2-one, 4-methyl-1,3-dioxane-2-one, 4,6-dimethyl-,3-dioxane-2-one, 1,3-dioxolane-2-one, and poly-1,3-dioxolane-2-one.

Enzymes of use as cross-linking agents may catalyze protein-protein, polysaccharide-polysaccharide, protein-polysaccharide, polyphenol-polyphenol, protein-polyphenol or polyphenol-polysaccharide linkages. In certain embodiments, the cross-linking enzyme can be, for example, a transglutaminase, a tyrosinase, a lipoxygenase, a protein disulfide reductase, a protein disulfide isomerase, a sulfhydryl oxidase, a peroxidase, a hexose oxidase, a lysyl oxidase, or an amine oxidase. As an alternative to enzymes, chemicals that promote formation of inter-molecular disulfide cross-links between the proteins can be used. In some embodiments, the chemicals are proteins (e.g. thioredoxin, glutaredoxin).

In some embodiments, a transglutaminase is used as a cross-linking agent. Transglutaminases catalyze the linkage of g-carboxamide group of a glutaminyl residue to the e- amino of a lysyl residue to form a g-carboxyl-e-amino-linkage. Transglutaminases have a broad occurrence in living systems and can be obtained from microorganisms belonging to the genus *Streptoverticillium,* or from *Bacillus subtilis,* from various Actinomycetes and Myxomycetes, from plants, fish and from mammalian sources, including the blood clotting protein activated Factor XIII.

The total amount of cross-linking agent used in the preparation of a microcapsule composition according to the invention can vary and be dependent upon the cross-linker or combination of cross-linkers used. In general, the amount of cross-linker present is in the range of 0.1 to 20 wt.-%, preferably from 0.1 to 10 wt.-%, more preferably from 0.2 to 5 wt.-%, and even more preferably from 0.5 to 2.5 wt.-%, all based on the total dry weight of the encapsulating material.

While a single cross-linking agent may be used in the preparation of a microcapsule composition of the present invention, it has been found that a combination of cross-linking agents can increase the cross-link density as compared to when a single cross-linking agent is used. Accordingly, in certain embodiments, two or more, three or more, or four or more cross-linking agents are used to improve cross-linking density and diversity. In particular embodiments, at least two cross-linking agents are used.

In preferred embodiments, the microcapsules are core-shell microcapsules comprising a core comprising a functional material and a shell encapsulating the core, the shell comprising a biodegradable encapsulating material.

In a particular embodiment of the microcapsule composition of the present invention comprises a plurality of microcapsules of the core-shell type are described in co-pending patent application WO2020/233887. As disclosed therein, the shell material comprises a polymeric stabilizer that is formed when a polymeric surfactant interacts to combine with at least one aminosilane through dispersion forces, electrostatic forces, hydrogen bonds or by covalent bonds. In other words, the polymeric stabilizer can be regarded as an assembly, which comprises moieties derived from a polymeric surfactant and moieties derived from at least one aminosilane.

The polymeric surfactant is a polymer that has the property of lowering the interfacial tension between an oil phase and an aqueous phase, when dissolved in one or both of the phases. This ability to lower interfacial tension is referred to as interfacial activity. The polymeric surfactant is soluble or dispersible in an aqueous phase or in water.

The polymeric stabilizer is believed to stabilize the oil-water interface during microcapsule formation, and to provide a stable platform, around which additional shell materials can form to create a microcapsule shell. Additional shell materials can include any of those described hereinabove, but in particular include polysaccharides, preferably a polysaccharide comprising beta (1 $\rightarrow$ 4) linked monosaccharide units, and even more particularly a cellulose derivative.

The polymeric surfactant can comprise or consist of a polysaccharide comprising carboxylic acid groups. The polysaccharide comprising carboxylic acid groups may comprise uronic acid units, in particular hexuronic acid units. Polysaccharides having uronic acid units, in particular hexuronic acid units are broadly available in nature. The hexuronic acid units can be selected from the group consisting of galacturonic acid units, glucuronic acid units, in particular 4-O-methyl-glucuronic acid units, guluronic acid units and mannuronic acid units. The polysaccharide comprising carboxylic acid groups may be branched. Branched polysaccharides comprising carboxylic acid groups have the advantage of forming more compact networks than linear polysaccharides and therefore may favor the imperviousness of the encapsulating shell, resulting in reduced leakage and greater encapsulation efficiency.

The polymeric surfactant can be selected from pectin, gum Arabic and alginate. These polysaccharides offer a most suitable combination of solubility, viscosity and interfacial activity that make the microcapsules particularly performing in terms of handling, storage stability and olfactive performance. The polymeric surfactant may also be hyaluronic acid.

The aminosilane can be selected from a compound of Formula (I).

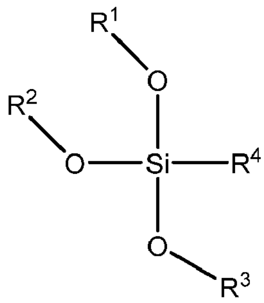

Formula (I)

In the above Formula (I), R1, R2 and R3 are each independently C1-C4 linear or branched alkyl or alkenyl residues, in particular methyl or ethyl, and R4 is a C1-C12, preferably a C1-C4, linear or branched alkyl or alkenyl residue comprising an amine functional group, in particular a primary, secondary or tertiary amine.

When the functional group is a primary amine, it can be a terminal primary amine. R4 is then preferably a C1-C8, even more preferably a C1-C4, linear terminal primary aminoalkyl residue. Specific aminosilanes of this category are selected from the group consisting of aminomethyltriethoxysilane, 2-aminoethyltriethoxysilane, 3-aminopropyltriethoxysilane, 4-aminobutyltri-ethoxysilane, 5-aminopentyltriethoxysilane, 6-aminohexyltriethoxysilane, 7-aminohptyltriethoxysilane and 8-aminooctyltriethoxysilane.

Without being bound by any theory, it is believed that the silane groups polycondensate with one another to form a silica network at the oil-water interface during microcapsule formation, which additionally stabilizes this interface.

The aminosilane can be a bipodal aminosilane, by which is meant a molecule comprising at least one amino group and two residues, each of these residues bearing at least one alkoxysilane moiety.

More particularly, the at least one bipodal aminosilane can have the Formula (II).

$$(O\text{-}R^4)_{(3\text{-}f)}(R^3)_f Si\text{-}R^2\text{-}X\text{-}R^2\text{-}Si(O\text{-}R^4)_{(3\text{-}f)}(R^3)_f \qquad \text{Formula (II)}$$

In the above Formula (II), X represents -NR1-, -NR1-CH2-NR1-, -NR1-CH2-CH2-NR1-, - NR1-CO-NR1-, or

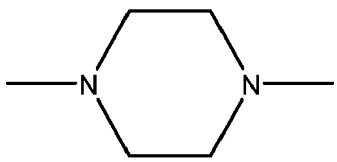

.

In the above Formula (II), R1 each independently stand for H, CH3 or C2H5. R2 each independently stand for a linear or branched alkylene group with 1 to 6 carbon atoms. R3 each independently stand for a linear or branched alkyl group with 1 to 4 carbon atoms. R4 each independently stand for H or for a linear or branched alkyl group with 1 to 4 carbon atoms. f stands for 0, 1 or 2.

Bipodal aminosilanes are particularly advantageous for forming stable oil-water interfaces, compared to conventional silanes.

Examples of bipodal aminosilanes include, but are not limited to, bis(3-(triethoxysilyl)propyl)amine, N,N'-bis(3-(trimethoxysilyl)propyl)urea, bis(3-(methyldiethoxysilyl) propyl)amine, N,N'-bis(3-(trimethoxysilyl)propyl) ethane-1,2-diamine, bis(3-(methyldimethoxysilyl)propyl)-N-methylamine and N,N'-bis(3-(triethoxysilyl) propyl)piperazine.

The bipodal aminosilane can be a secondary aminosilane. Using a secondary bipodal aminosilane instead of primary aminosilane decreases the reactivity of the polymeric stabilizer with respect to electrophilic species, in particular aldehydes. Hence, functional materials containing high levels of aldehydes may be encapsulated with a lower propensity for adverse interactions between core-forming and shell-forming materials.

The secondary bipodal aminosilane can be bis(3-(triethoxysilyl)propyl)amine. This particular secondary aminosilane has the advantage of releasing ethanol instead of more toxic and less desirable methanol during the polycondensation of the ethoxysilane groups.

Other aminosilanes may also be used in combination with the aforementioned bipodal aminosilanes, in particular the aminosilanes described hereinabove.

The aminosilane to polymeric surfactant weight ratio can be from 0.1 to 1.1, in particular from 0.2 to 0.9, even

more particularly from 0.3 to 0.7, for example 0.5.

The polymeric stabilizer can be formed by combination of a polymeric surfactant with at least one aminosilane and further a polyfunctional isocyanate. Polyfunctional isocyanates may densify the arrangement of the polymeric surfactant at the oil/water interface. Without being bound by any theory, it is supposed that the polyfunctional isocyanate cross-links both aminosilanes and polysaccharides by forming polyurea and polyurethane bonds.

The polyfunctional isocyanate may be selected from alkyl, alicyclic, aromatic and alkylaromatic, as well as anionically modified polyfunctional isocyanates, with two or more (e.g. 3, 4, 5, etc.) isocyanate groups in a molecule.

Preferably, at least one polyfunctional isocyanate is an aromatic or an alkylaromatic polyfunctional isocyanate, the alkylaromatic polyfunctional isocyanate having preferably methylisocyanate groups attached to an aromatic ring. Both aromatic and methylisocyanate-substituted alkylaromatic polyfunctional isocyanates have a superior reactivity compared to alkyl and alicyclic polyfunctional isocyanates. Among these, 2-ethylpropane-1,2,3-triyl tris((3-(isocyanatomethyl)phenyl)carbamate) is particularly preferred, because of its tripodal nature that favors the formation of intermolecular cross-links and because of its intermediate reactivity that favors network homogeneity. This alkylaromatic polyfunctional isocyanate is commercially available under the trademark Takenate D-110N, sold by Mitsui or under the trademark Desmodur® Quix175, sold by Covestro.

Preferably, the polymeric stabilizer is formed by combination of pectin with bis(3-(triethoxysilyl)propyl)amine. Preferably, the polymeric stabilizer is formed by combination of pectin with bis(3-(triethoxysilyl)propyl)amine and 2-ethylpropane-1,2,3-triyl tris((3-(isocyanatomethyl)phenyl)carbamate). These combinations of natural polymeric surfactant and bipodal secondary aminosilane provide particularly advantageous interface stability and release properties. The stabilized interface is sufficiently impervious to effectively encapsulate the at least one benefit agent comprised in the core. The polymeric stabilizer effectively forms a shell encapsulating the at least one perfume ingredient comprised in the core.

The shell can then additionally comprise a polysaccharide, preferably a polysaccharide comprising beta (1 $\rightarrow$ 4) linked monosaccharide units, even more preferably a cellulose derivative, in particular selected form the group consisting of hydroxyethyl cellulose, hydroxypropylmethyl cellulose, cellulose acetate and carboxymethyl cellulose, preferably hydroxyethyl cellulose.

The polysaccharide may be deposited on the surface of the polymeric stabilizer coating droplets of core material. In this way, it is helpful to visualize the microcapsule shell as having a multilayer structure having at least one layer of polymeric stabilizer and one layer of polysaccharide, which may improve the imperviousness of the encapsulating shell by increasing the amount of encapsulating material, although that is not to say that the shell necessarily is composed of sharply defined, discrete layers. On the contrary, the layers may be rather undefined or indiscrete to the point of the shell appearing to be essentially homogenous.

The polysaccharide may react with unreacted groups of the polymeric stabilizer and increase the density of the cross-linked shell. But the polysaccharide may also interact with the polymeric stabilizer by physical forces, physical interactions, such as hydrogen bonding, ionic interactions, hydrophobic interactions or electron transfer interactions.

The shell additionally comprising a polysaccharide can be further stabilized with a stabilizing agent. Preferably the stabilizing agent comprises at least two carboxylic acid groups. Even more preferably, the stabilizing agent is selected from the group consisting of citric acid, benzene-1,3,5-tricarboxylic acid, 2,5-furandicarboxylic acid, itaconic acid, poly(itaconic acid) and combinations thereof.

In preferred embodiments, the shell of the core-shell microcapsules comprises a complex coacervate formed of at least one cationic biodegradable polymer and at least one anionic biodegradable polymer.

In further particular embodiments of the present invention, the microcapsule composition comprises core-shell microcapsules described in published patent applications WO1996/020612A1, WO2001/03825A1 or WO2015/150370A1 and US patent US6045835A. In these illustrative embodiments, the shell material of the core-shell microcapsules is a complex coacervate formed of at least one cationic biopolymer, such as chitosan or a protein, and at least one polysaccharide, in particular selected from any of the proteins and polysaccharides referred to herein. Such core-shell microcapsules are eminently suitable for use in microcapsule compositions of the present invention.

In still further particular embodiments of the present invention, the microcapsule composition comprises microcapsules such as those described in co-pending patent application WO2021/239742A1. In these illustrative embodiments, core-shell microcapsules are formed by cross-linking of at least one protein with a first cross-linking agent, in order to form a simple coacervate, followed by the addition of at least one polysaccharide to form a complex coacervate, wherein the protein and the polysaccharide may be selected from any of the proteins and polysaccharides referred to herein.

It has been found that building first a simple cross-linked protein coacervate at the core composition/aqueous phase interface, followed by the complex coacervation of this cross-linked protein with a second polyelectrolyte, namely at least one polysaccharide, leads to the formation of a shell having enhanced imperviousness. In particular, the shell shows enhanced imperviousness with respect to low-molecular weight functional materials in the cores, i.e. materials having a molecular weight lower than 350 g/mol, such as fragrance ingredients.

Furthermore, compared to conventional coacervate microcapsules, these microcapsules show increased stability in liquid consumer product formulations, in particular water-based consumer products, such as fabric care conditioners.

Proteins that are particularly suitable for use in these coacervate microcapsules include gelatins, whey proteins, pea proteins, soy proteins, caseins and albumins, for instance bovine serum albumin. In particular embodiments the at least one protein is a gelatin, preferably a Type B gelatin. Type B gelatin can be obtained from the alkaline treatment of collagen and is well known for its ability to form complexes with anionic polyelectrolytes, such as negatively charged polysaccharides under mild acidic conditions. Gelatin is usually characterized by so-called "Bloom Strength". In the present context, the Bloom Strength refers to the rigidity of a gelatin film, as measured by a so-called "Bloom Gelometer", according to the Official Procedures of the Gelatin Manufacturers Institute of America, Inc., revised 2019, Chapter 2.1. According to this procedure, the Bloom Strength, expressed in Bloom, is equal to the weight, expressed in grams, required to move vertically a standardized plunger, having a diameter of 12.5 mm, to a depth of 4 mm into a gelatin gel, which has been prepared under controlled conditions, i.e. by dissolving 6.67 wt.-% of gelatin in deionized water at 60 °C, in a standardized jar, and letting the gel form for 17 hours at 10 °C. The higher the weight is, the higher is the Bloom Strength of the gelatin used for making the tested gel.

In preferred embodiments the Type B gelatin has a Bloom Strength of 200 to 250 Bloom. If the Bloom Strength is too low, the gel is mechanically weak and coacervates obtained therefrom may not form a self-standing layer of gelatin-rich phase around core material. If the Bloom Strength is too high, then the coacervates and the gelatin-rich phase obtained therefrom may be too brittle.

The Type B gelatin can be obtainable from fish, because fish gelatin meets better acceptance with consumers than beef or pork gelatin, mainly due to health concerns, sociological context or religious rules.

Alternatively, the protein may be a vegetable protein, in particular a pea protein and/or a soy protein, which have the advantage of being vegan.

The cross-linking agent may be any of those disclosed herein. However, in preferred embodiments, the first cross-linking agent is a trifunctional alkylaromatic isocyanate. More preferably, the trifunctional alkylaromatic isocyanate is an adduct of 2-ethylpropane-1,2,3-triol or 2-ethyl-2-(hydroxymethyl)propane-1,3-diol with 1-isocyanato-2-(isocyanatomethyl)benzene, 1-isocyanato-3-(isocyanatomethyl)benzene and/or 1-isocyanato-4-(isocyanatomethyl)-benzene. In a particularly preferred embodiment, the trifunctional araliphatic isocyanate is an adduct of 2-ethylpropane-1,2,3-triol with 1-isocyanato-3-(isocyanatomethyl)benzene. Adducts of 2-ethylpropane-1,2,3-triol with 1-isocyanato-3-(isocyanatomethyl)benzene are available commercially under the trade names Takenate D-110N (ex Mitsui Chemicals) or Quix 175 (ex Covestro).

In connection with this particular illustrative embodiment of the present invention, the at least one polysaccharide preferably comprises carboxylic acid groups. Polysaccharides comprising carboxylic acid groups are particularly suitable for complex coacervation with proteins, in particular with Type B gelatin. This is due to the fact that the net electrical charge of these polysaccharides may be adjusted by adjusting the pH, so that the complexation with ampholytic proteins is facilitated. Complexation occurs at the pH where the protein has an overall positive electrical charge, whereas the polysaccharide as an overall negative charge, so that the overall electrical charge of the complex is neutral. These polysaccharides include native polysaccharides from nature and modified polysaccharides. Monovalent alkaline metal salts of these polysaccharides may also be used.

In particular, the at least one polysaccharide is selected from the group consisting of carboxymethylcellulose, gum Arabic, alginate, pectin, hyaluronic acid, xanthan gum, gellan gum, and their salts with monovalent alkaline metals. Carboxymethylcellulose, sodium carboxymethylcellulose and gum Arabic are particularly preferred.

In preferred embodiments, the imperviousness and stability of the shell may be further improved by cross-linking of the complex coacervate with a second cross-linking agent. In particularly preferred embodiments, the second cross-linking agent is a difunctional aldehyde selected from the group consisting of succinaldehyde, glutaraldehyde, glyoxal, benzene-1,2-dialdehyde, benzene-1,3-dialdehyde, benzene-1,4-dialdehyde, piperazine-N,N-dialdehyde, and 2,2'-bipyridyl-5,5'-dialdehyde. Di-functional aldehydes are known to be effective cross-linking agents for proteins.

The weight ratio of the first cross-linking agent, in particular the trifunctional araliphatic isocyanate, to the at least one protein, in particular the gelatin, can be from 0.08 to 1.2, preferably from 0.12 to 0.8, more preferably from 0.16 to 0.6, even more preferably from 0.2 to 0.4. With such weight ratios of first cross-linking agent to protein, good stability of the microcapsules, in particular with respect to leakage, can be achieved while at the same time ensuring biodegradability.

The weight ratio of polysaccharide to protein typically depends on the nature of the polysaccharide. Without being bound by any theory, it is assumed that this weight ratio depends on the degree of substitution of the polysaccharide, in particular with carboxylic or carboxylate groups, if applicable. Preferably, the weight ratio between the at least one polysaccharide and the at least one protein is from 0.05 to 0.5, preferably from 0.08 to 0.2.

The microcapsule suspended in an aqueous liquid may be in the form of a core-shell microcapsule, or in the form of matrix particles, wherein the functional material is not contained in a discrete core surrounded by a shell, but is

rather dispersed or dissolved in an encapsulating polymeric matrix. The biodegradable encapsulating material may be present in the form of a shell surrounding a core comprising the functional material to be encapsulated, forming thereby a core-shell microcapsule, or in the form of a matrix particle in which the functional material is dispersed in the biodegradable material.

The diameter of the core-shell microcapsules ranges from 1 to 100 μm, more particularly from 5 to 75 μm, still more particulary from 10 to 50 μm, still more particularly from 12 to 30 μm. Microcapsules that are too small have a unfavorably large surface to volume ratio and may be less stable with respect to functional material leakage, whereas microcapsules that are too large may not deposit well onto substrates and be visible to the eye.

In particular embodiments, the matrix of matrix particles comprises an alginate that is cross-linked with a divalent metal cation, such as $Ca^{2+}$. Such matrix capsules are typically obtained by dropping an oil in water emulsion comprising alginate into an aqueous solution of divalent metal salt, such as calcium chloride.

Functional materials that are encapsulated in the microcapsules described herein may include, but are not limited to, fragrances, pro-fragrances, flavors, malodor counteractive agents, vitamins or derivatives thereof, anti-inflammatory agents, fungicides, anesthetics, analgesics, antimicrobial actives, anti-viral agents, anti-infectious agents, anti-acne agents, skin lightening agents, insect repellants, animal repellents, vermin repellents, emollients, skin moisturizing agents, wrinkle control agents, UV protection agents, fabric softener actives, enzymes, hard surface cleaning actives, skin or hair conditioning agents, flame retardants, antistatic agents, taste modulators, probiotics, or a combination thereof.

In particular embodiments the functional material is a fragrance composition comprising at least one fragrance ingredient or a flavor composition comprising at least one flavor ingredient. A comprehensive list of fragrance and flavor ingredients that may be encapsulated in accordance with the present invention may be found in the perfumery literature, for example "Perfume & Flavor Chemicals", S. Arctander (Allured Publishing, 1994), or later editions of the work such as can be found at https://www.amazon.com/Perfume-Flavor-Chemicals-Aroma-Vol-1/dp/0244483248.

Fragrance ingredients useful as components in microcapsule cores include but are not limited to ACETOPHENONE EXTRA (1-phenylethanone); ACETYL ISOEUGENOL ((E)-2-methoxy-4-(prop-1-en-1-yl)phenyl acetate); ADOXAL (2,6,10-trimethylundec-9-enal); AGRUMEX (2-(tert-butyl)cyclohexyl acetate); hexanol; decanal; undecanal; ALDEHYDE C 11 MOA (2-methyldecanal); ALDEHYDE C 11 UNDECYLENIC (undec-10-enal); ALDEHYDE C 110 UNDECYLIC (undecanal); ALDEHYDE C 12 LAURIC (dodecanal); ALDEHYDE C 12 MNA (2-methylundecanal); hexanal; octanal; ALDEHYDE C 9 ISONONYLIC (3,5,5-trimethylhexanal); nonanal; ALDEHYDE ISO C 11 ((E)-undec-9-enal); ALLYL AMYL GLYCOLATE (prop-2-enyl 2-(3-methylbutoxy)acetate); ALLYL CAPROATE (prop-2-enyl hexanoate); ALLYL CYCLOHEXYL PROPIONATE (prop-2-enyl 3-cyclohexylpropanoate); ALLYL HEXANOATE (prop-2-enyl hexanoate); ALLYL OENANTHATE (prop-2-enyl heptanoate); AMBER CORE (1-((2-(tert-butyl)cyclohexyl)oxy)butan-2-ol); AMBERKETAL (3,8,8,11a-tetramethyldodecahydro-1H-3,5a-epoxynaphtho[2,1-c]oxepine); AMBERMAX (1,3,4,5,6,7-hexahydro-.beta.,1,1,5,5-pentamethyl-2H-2,4a-methanonaphthalene-8-ethanol); AMBRETTOLIDE ((Z)-oxacycloheptadec-10-en-2-one); AMBROFIX ((3aR,5aS,9aS,9bR)-3a,6,6,9a-tetramethyl-2,4,5,5a,7,8,9,9b-octahydro-1H-benzo[e][1]benzofuran); AMYL BUTYRATE (pentyl butanoate); AMYL CINNAMIC ALDEHYDE ((Z)-2-benzylideneheptanal); AMYL SALICYLATE (pentyl 2-hydroxybenzoate); ANETHOLE ((E)-1-methoxy-4-(prop-1-en-1-yl)benzene); ANISOL ((4-methoxyphenyl)methanol); ANISYL ACETATE (4-methoxybenzyl acetate); APHERMATE (1-(3,3-dimethylcyclohexyl)ethyl formate); AUBEPINE PARA CRESOL (4-methoxybenzaldehyde); AURENTIOL ((E)-methyl 2-((7-hydroxy-3,7-dimethyloctylidene)amino)benzoate); BELAMBRE ((1R,2S,4R)-2'-isopropyl-1,7,7-trimethylspiro[bicyclo[2.2.1]heptane-2,4'-[1,3]dioxane]); benzaldehyde; benzyl acetate; BENZYL ACETONE (4-phenylbutan-2-one); benzyl alcohol; benzyl benzoate; BENZYL CINNAMATE (benzyl 3-phenylprop-2-enoate); BENZYL SALICYLATE (benzyl 2-hydroxybenzoate); BERRYFLOR (ethyl 6-acetoxyhexanoate); BICYCLO NONALACTONE (octahydro-2H-chromen-2-one); cedar wood oil; BOISAMBRENE FORTE ((ethoxymethoxy)cyclododecane); BOISIRIS ((1S,2R,5R)-2-ethoxy-2,6,6-trimethyl-9-methylenebicyclo[3.3.1]nonane); BORNEOL ((1S,2S,4S)-1,7,7-trimethylbicyclo[2.2.1]heptan-2-ol); BORNYL ACETATE ((2S,4S)-1,7,7-trimethylbicyclo[2.2.1]heptan-2-yl acetate); BOURGEONAL (3-(4-(tert-butyl)phenyl)propanal); butyl acetate; BUTYL BUTYRO LACTATE (1-butoxy-1-oxopropan-2-yl butanoate); BUTYL CYCLOHEXYL ACETATE PARA (4-(tert-butyl)cyclohexyl acetate); BUTYL QUINOLINE SECONDARY (2-(2-methylpropyl)quinoline); CAMPHOR ((1S,4S)-1,7,7-trimethylbicyclo[2.2.1]heptan-2-one); CARVACROL (5-isopropyl-2-methylphenol); CARVONE (2-methyl-5-prop-1-en-2-ylcyclohex-2-en-1-one); CASHMERAN (1,1,2,3,3-pentamethyl-2,3,6,7-tetrahydro-1H-inden-4(5H)-one); CASSYRANE (5-tert-butyl-2-methyl-5-propyl-2H-furan); CEDRENE ((1S,8aR)-1,4,4,6-tetramethyl-2,3,3a,4,5,8-hexahydro-1H-5,8a-methanoazulene); CEDRYL ACETATE ((1S,6R,8aR)-1,4,4,6-tetramethyloctahydro-1H-5,8a-methanoazulen-6-yl acetate); CEDRYL METHYL ETHER ((1R,6S,8aS)-6-methoxy-1,4,4,6-tetramethyloctahydro-1H-5,8a-methanoazulene); CETONE V ((E)-1-(2,6,6-trimethylcyclohex-2-en-1-yl)hepta-1,6-dien-3-one); CINNAMIC ALCOHOL ((E)-3-phenylprop-2-en-1-ol); CINNAMIC ALDEHYDE ((2E)-3-phenylprop-2-enal); CINNAMYL ACETATE ((E)-3-phenylprop-2-en-1-yl acetate); CIS 3 HEXENOL ((Z)-hex-3-en-1-ol); CIS JASMONE ((Z)-3-methyl-2-(pent-2-en-1-yl)cyclopent-2-enone); CITRAL ((E)-3,7-dimethylocta-2,6-dienal); CITRATHAL R ((Z)-1,1-diethoxy-3,7-dimethylocta-2,6-diene); CITRONELLAL (3,7-dimethyloct-6-enal); CITRONELLOL (3,7-dimethyloct-6-en-1-ol); CITRONELLYL ACETATE (3,7-dimethyloct-6-en-1-yl acetate); CITRONELLYL FORMATE (3,7-dimethyloct-6-en-1-yl formate); CITRONELLYL NITRILE (3,7-dimethyloct-6-enenitrile); CLONAL (dodecanenitrile); CORANOL (4-cyclohexyl-2-methylbutan-2-ol); CORYLONE DRIED (2-hydroxy-3-methylcyclopent-2-enone); COSMONE ((Z)-3-methylcyclotetradec-5-enone); COUMARIN (2H-chromen-2-one); CRESYL ACETATE PARA ((4-methylphenyl) acetate); CRESYL METHYL ETHER PARA (1-methoxy-4-methylbenzene); CUMIN NITRILE (4-isopropylbenzonitrile); CYCLAL C (2,4-dimethylcyclohex-3-ene-1-carbaldehyde); CYCLAMEN ALDEHYDE (3-(4-isopropylphenyl)-2-methylpropanal); CYCLOGALBANATE (allyl 2-(cyclohexyloxy)acetate); CYCLOHEXYL ETHYL ACETATE (2-cyclohexylethyl acetate); CYCLOHEXYL SALICYLATE (cyclohexyl 2-hydroxybenzoate); CYCLOMYRAL (8,8-dimethyl-1,2,3,4,5,6,7,8-octahydronaphthalene-2-carbaldehyde); CYMENE PARA (1-methyl-4-propan-2-ylbenzene); DAMASCENONE ((E)-1-(2,6,6-trimethylcyclohexa-1,3-dien-1-yl)but-2-en-1-one); DAMASCONE ALPHA ((E)-1-(2,6,6-trimethylcyclohex-2-en-1-yl)but-2-en-1-one); DAMASCONE DELTA (1-(2,6,6-trimethyl-1-cyclohex-3-enyl)but-2-en-1-one); DECALACTONE GAMMA (5-hexyloxolan-2-one); DECENAL-4-TRANS ((E)-dec-4-enal); DELPHONE (2-pentylcyclopentanone); DELTA CARENE (3,7,7-trimethylbicyclo[4.1.0]hept-3-ene); DELTA-3 CARENE ((1S,6S)-3,7,7-trimethylbicyclo[4.1.0]hept-3-ene); DIHYDRO ANETHOLE (1-methoxy-4-propylbenzene); DIHYDRO JASMONE (3-methyl-2-pentylcyclopent-2-enone); DIHYDRO MYRCENOL (2,6-dimethyloct-7-en-2-ol); DIMETHYL ANTHRANILATE (methyl 2-(methylamino)benzoate); DIMETHYL BENZYL CARBINOL (2-methyl-1-phenylpropan-2-ol); DIMETHYL BENZYL CARBINYL ACETATE (2-methyl-1-phenylpropan-2-yl acetate); DIMETHYL BENZYL CARBINYL BUTYRATE (2-methyl-1-phenylpropan-2-yl butanoate); DIMETHYL OCTENONE (4,7-dimethyloct-6-en-3-one); DIMETOL (2,6-dimethylheptan-2-ol); DIPHENYL OXIDE (oxydibenzene); DIPHENYL OXIDE (oxydibenzene); DODECALACTONE DELTA (6-heptyltetrahydro-2H-pyran-2-one); DODECALACTONE GAMMA (5-octyloxolan-2-one); DODECENAL ((E)-dodec-2-enal); DUPICAL ((E)-4-((3aS,7aS)-hexahydro-1H-4,7-methanoinden-5(6H)-ylidene)butanal); EBANOL ((E)-3-methyl-5-(2,2,3-trimethylcyclopent-3-en-1-yl)pent-4-en-2-ol); ESTERLY (ethyl cyclohexyl carboxylate); ETHYL ACETATE (ethyl acetate); ETHYL ACETOACETATE (ethyl 3-oxobutanoate); ETHYL CINNAMATE (ethyl 3-phenylprop-2-enoate); ETHYL HEXANOATE (ethyl hexanoate); ETHYL LINALOOL ((E)-3,7-dimethylnona-1,6-dien-3-ol); ETHYL LINALYL ACETATE ((Z)-3,7-dimethylnona-1,6-dien-3-yl acetate); ETHYL MALTOL (2-ethyl-3-hydroxy-4H-pyran-4-one); ethyl 2-methyl butyrate; ethyl octanoate); ETHYL OENANTHATE (ethyl heptanoate); ETHYL PHENYL GLYCIDATE (ethyl 3-phenyloxirane-2-carboxylate); ETHYL SAFRANATE (ethyl 2,6,6-trimethylcyclohexa-1,3-diene-1-carboxylate); ETHYL VANILLIN (3-ethoxy-4-hydroxybenzaldehyde); ETHYLENE BRASSYLATE (1,4-dioxacycloheptadecane-5,17-dione); EUCALYPTOL ((1s,4s)-1,3,3-trimethyl-2-oxabicyclo[2.2.2]octane); EUCALYPTUS GLOBULUS ESS CHINA (eucalyptus oil); EUGENOL (4-allyl-2-methoxyphenol); EVERNYL (methyl 2,4-dihydroxy-3,6-dimethylbenzoate); FENCHYL ACETATE ((2S)-1,3,3-trimethylbicyclo[2.2.1]heptan-2-yl acetate); FENCHYL ALCOHOL ((1S,2R,4R)-1,3,3-trimethylbicyclo[2.2.1]heptan-2-ol); FENNALDEHYDE (3-(4-methoxyphenyl)-2-methylpropanal); FIXAMBRENE (3a,6,6,9a-tetramethyldodecahydronaphtho[2,1-b]furan); FIXOLIDE (1-(3,5,5,6,8,8-hexamethyl-5,6,7,8-tetrahydronaphthalen-2-yl)ethanone); FLORALOZONE (3-(4-ethylphenyl)-2,2-dimethylpropanal); FLORHYDRAL (3-(3-isopropylphenyl)butanal); FLORIDILE ((E)-undec-9-enenitrile); FLOROCYCLENE ((3aR,6S,7aS)-3a,4,5,6,7,7a-hexahydro-1H-4,7-methanoinden-6-yl propanoate); FLOROPAL (2,4,6-trimethyl-4-phenyl-1,3-dioxane); FLOROSA (tetrahydro-4-methyl-2-(2-methylpropyl)-2H-pyran-4-ol); FRESKOMENTHE (2-(sec-butyl)cyclohexanone); FRUCTONE (ethyl 2-(2-methyl-1,3-dioxolan-2-yl)acetate); FRUITATE ((3aS,4S,7R,7aS)-ethyl octahydro-1H-4,7-methanoindene-3a-carboxylate); FRUTONILE (2-methyldecanenitrile); GALBANONE PURE (1-(5,5-dimethylcyclohex-1-en-1-yl)pent-4-en-1-one); galbanum oil; GARDENOL (1-phenylethyl acetate); GARDOCYCLENE ((3aR,6S,7aS)-3a,4,5,6,7,7a-hexahydro-1H-4,7-methanoinden-6-yl 2-methyl propanoate); GERANIOL ((E)-3,7-dimethylocta-2,6-dien-1-ol); GERANYL ACETATE ((E)-3,7-dimethylocta-2,6-dien-1-yl acetate); GERANYL ACETONE ((E)-6,10-dimethylundeca-5,9-dien-2-one); GERANYL CROTONATE (ethyl but-2-enoate); GERANYL ISOBUTYRATE ((E)-3,7-dimethylocta-2,6-dien-1-yl 2-methylpropanoate); clove oil; GIVESCONE (ethyl 2-ethyl-6,6-dimethylcyclohex-2-enecarboxylate); HABANOLIDE ((E)-oxacyclohexadec-12-en-2-one); HEDIONE (methyl 3-oxo-2-pentylcyclopentaneacetate); HELIOTROPINE CRYSTALS (benzo[d][1,3]dioxole-5-carbaldehyde); HERBANATE ((2S)-ethyl 3-isopropylbicyclo[2.2.1]hept-5-ene-2-carboxylate); HEXENAL-2-TRANS ((E)-hex-2-enal); HEXENOL-3-CIS ((Z)-hex-3-en-1-ol); HEXENYL-3-CIS ACETATE ((Z)-hex-3-en-1-yl acetate); HEXENYL-3-CIS BUTYRATE ((Z)-hex-3-en-1-yl butanoate); HEXENYL-3-CIS ISOBUTYRATE ((Z)-hex-3-en-1-yl 2-methylpropanoate); HEXENYL-3-CIS SALICYLATE ((Z)-hex-3-en-1-yl 2-hydroxybenzoate); hexyl acetate; hexyl benzoate; HEXYL BUTYRATE (hexyl butanoate); HEXYL CINNAMIC ALDEHYDE ((E)-2-benzylideneoctanal); HEXYL ISOBUTYRATE (hexyl 2-methylpropanoate); HEXYL SALICYLATE (hexyl 2-hydroxybenzoate); HYDROXYCITRONELLAL (7-hydroxy-3,7-dimethyloctanal); INDOFLOR (4,4a,5,9b-tetrahydroindeno[1,2-d][1,3]dioxine); INDOLE (1H-indole); INDOLENE (8,8-di(1H-indol-3-yl)-2,6-dimethyloctan-2-ol); IONONE BETA ((E)-4-(2,6,6-trimethylcyclohex-1-en-1-yl)but-3-en-2-one); IRISANTHEME ((E)-3-methyl-4-(2,6,6-trimethylcyclohex-2-en-1-yl)but-3-en-2-one); IRISONE ALPHA ((E)-4-(2,6,6-trimethylcyclohex-2-en-1-yl)but-3-en-2-one); IRONE ALPHA ((E)-4-(2,5,6,6-tetramethylcyclohex-2-en-1-yl)but-3-en-2-one); ISO E SUPER (1-(2,3,8,8-tetramethyl-1,2,3,4,5,6,7,8-octahydronaphthalen-2-yl)ethanone); ISOAMYL ACETATE (3-methylbutyl acetate); ISOAMYL BUTYRATE (3-methylbutyl butanoate); ISOBORNYL ACETATE ([(1R,4S,6R)-1,7,7-trimethyl-6-bicyclo[2.2.1]heptanyl] acetate); ISOBUTYL METHOXY PYRAZINE (2-methylpropyl 3-methoxypyrazine); ISOCYCLOCITRAL (2,4,6-trimethylcyclohex-3-enecarbaldehyde); ISOEUGENOL ((E)-2-methoxy-4-(prop-1-en-1-yl)phenol); ISOJASMONE B 11 (2-hexylcyclopent-2-en-1-one); ISOMENTHONE DL (2-isopropyl-5-methylcyclohexanone); ISONONYL ACETATE (3,5,5-trimethylhexyl acetate); ISOPROPYL METHYL-2-BUTYRATE (isopropyl 2-methylbutanoate); ISOPROPYL QUINOLINE (6-isopropylquinoline); ISORALDEINE ((E)-3-methyl-4-(2,6,6-trimethylcyclohex-2-en-1-yl)but-3-en-2-one); JASMACYCLENE ((3aR,6S,7aS)-3a,4,5,6,7,7a-hexahydro-1H-4,7-methanoinden-6-yl acetate); JASMONE CIS ((Z)-3-methyl-2-(pent-2-en-1-yl)cyclopent-2-enone); JASMONYL (3-butyl-5-methyltetrahydro-2H-pyran-4-yl acetate); JASMOPYRANE FORTE (3-pentyltetrahydro-2H-pyran-4-yl acetate); JAVANOL ((1-methyl-2-((1,2,2-trimethylbicyclo[3.1.0]hexan-3-yl)methyl)cyclopropyl)-methanol); KOAVONE ((Z)-3,4,5,6,6-pentamethylhept-3-en-2-one); LAITONE (8-isopropyl-1-oxaspiro[4.5]decan-2-one); lavandin and lavender oils; LEAF ACETAL ((Z)-1-(1-ethoxyethoxy)hex-3-ene); LEMONILE ((2E,6Z)-3,7-dimethylnona-2,6-dienenitrile); LIFFAROME ((Z)-hex-3-en-1-yl methyl carbonate); LILIAL (3-(4-(tert-butyl)phenyl)-2-methylpropanal); LIMONENE 1-methyl-4-prop-1-en-2-ylcyclohexene; LINALOOL (3,7-dimethylocta-1,6-dien-3-ol); LINALOOL OXIDE (2-(5-methyl-5-vinyltetrahydrofuran-2-yl)propan-2-ol); LINALYL ACETATE (3,7-dimethylocta-1,6-dien-3-yl acetate); LONGIFOLENE ((3R,3aR,8R,8aS)-4,4,8-trimethyl-9-methylenedecahydro-3,8-methanoazulene); MAHONIAL((4E)-9-hydroxy-5,9-dimethyl-4-decenal); MALTOL (3-hydroxy-2-methyl-4H-pyran-4-one); MALTYL ISOBUTYRATE (2-methyl-4-oxo-4H-pyran-3-yl 2-methylpropanoate); mandarin oil; MANZANATE (ethyl 2-methylpentanoate); MAYOL ((4-isopropylcyclohexyl)methanol); MEFROSOL (3-methyl-5-phenylpentan-1-ol); MELONAL (2,6-dimethylhept-5-enal); MENTHOL 2-isopropyl-5-methylcyclohexanol; MENTHONE (5-methyl-2-propan-2-ylcyclohexan-1-one); MERCAPTO-8-METHANE-3-ONE (mercapto-para-menthan-3-one); METHYL ANTHRANILATE (methyl 2-aminobenzoate); methyl benzoate; METHYL CEDRYL KETONE (1-((1S,8aS)-1,4,4,6-tetramethyl-2,3,3a,4,5,8-hexahydro-1H-5,8a-methanoazulen-7-yl)ethanone); METHYL CINNAMATE (methyl 3-phenylprop-2-enoate); METHYL DIANTILIS (2-ethoxy-4-(methoxymethyl)phenol); METHYL DIHYDRO ISOJASMONATE (methyl 2-hexyl-3-oxocyclopentane-1-carboxylate); METHYL HEPTENONE (6-methylhept-5-en-2-one); METHYL LAITONE (8-methyl-1-oxaspiro[4.5]decan-2-one); METHYL NONYL KETONE (undecan-2-one); METHYL OCTYNE CARBONATE (methyl non-2-ynoate); METHYL PAMPLEMOUSSE (6,6-dimethoxy-2,5,5-trimethylhex-2-ene); METHYL SALICYLATE (methyl 2-hydroxybenzoate); MUSCENONE ((Z)-3-methylcyclopentadec-5-enone); MYRALDENE (4-(4-methylpent-3-en-1-yl)cyclohex-3-enecarbaldehyde); MYRCENE 90 (7-methyl-3-methyleneocta-1,6-diene); MYSTIKAL (2-methylundecanoic acid); NECTARYL (2-(2-(4-methylcyclohex-3-en-1-yl)propyl)cyclopentanone); NEOBERGAMATE FORTE (2-methyl-6-methyleneoct-7-en-2-yl acetate); NEOCASPIRENE EXTRA (10-isopropyl-2,7-dimethyl-1-oxaspiro[4.5]deca-3,6-diene); NEOFOLIONE ((E)-methyl non-2-enoate); NEROLEX ((2Z)-3,7-dimethylocta-2,6-dien-1-ol); NEROLIDOL ((Z)-3,7,11-trimethyldodeca-1,6,10-trien-3-ol); NEROLIDYLE ((Z)-3,7,11-trimethyldodeca-1,6,10-trien-3-yl acetate); NEROLINE CRYSTALS (2-ethoxynaphthalene); NEROLIONE (1-(3-methylbenzofuran-2-yl)ethanone); NERYL ACETATE ((Z)-3,7-dimethylocta-2,6-dien-1-yl acetate); NIRVANOLIDE ((E)-13-methyloxacyclopentadec-10-en-2-one); NONADIENAL ((2E,6Z)-nona-2,6-dienal); NONADIENOL-2,6 ((2Z,6E)-2,6-nonadien-1-ol); NONADYL (6,8-dimethylnonan-2-ol); NONALACTONE GAMMA (5-pentyloxolan-2-one); NONENAL-6-CIS ((Z)-non-6-enal); NONENOL-6-CIS ((Z)-non-6-en-1-ol); NOPYL ACETATE (2-(6,6-dimethylbicyclo[3.1.1]hept-2-en-2-yl)ethyl acetate); NYMPHEAL (3-(4-(2-methylpropyl)-2-methylphenyl)propanal); OCTALACTONE DELTA (6-propyltetrahydro-2H-pyran-2-one); OCTANONE-2 (octan-2-one); ORANGE TERPENES (orange terpenes); ORANGER CRYSTALS (1-(2-naphtalenyl)-ethanone); ORIVONE (4-(tert-pentyl)cyclohexanone); PANDANOL ((2-methoxyethyl)benzene); PARA CYMENE (1-methyl-4-propan-2-ylbenzene); PARA TERT BUTYL CYCLOHEXYL ACETATE (4-(tert-butyl)cyclohexyl acetate); PARADISAMIDE (2-ethyl-N-methyl-N-(m-tolyl)butanamide); patchouli oil; PEACH PURE (5-heptyldihydrofuran-2(3H)-one); PELARGENE (2-methyl-4-methylene-6-phenyltetrahydro-2H-pyran); PELARGOL (3,7-dimethyloctan-1-ol); PEONILE (2-cyclohexylidene-2-phenylacetonitrile); PETALIA (2-cyclohexylidene-2-(o-tolyl)acetonitrile); PHARAONE (2-cyclohexylhepta-1,6-dien-3-one); PHENOXANOL (3-methyl-5-phenylpentan-1-ol); PHENOXY ETHYL ISOBUTYRATE (2-(phenoxy)ethyl 2-methylpropanoate); PHENYLACETALDEHYDE (2-phenyl-ethanal); PHENYL ETHYL ACETATE (2-phenylethyl acetate); PHENYL ETHYL ALCOHOL (2-phenylethanol); PHENYL ETHYL ISOBUTYRATE (2-phenylethyl 2-methylpropanoate); PHENYL ETHYL PHENYL ACETATE (2-phenylethyl 2-phenylacetate); PHENYL PROPYL ALCOHOL (3-phenylpropan-1-ol); PINENE ALPHA (2,6,6-trimethylbicyclo[3.1.1]hept-2-ene); PINENE BETA (6,6-dimethyl-2-methylenebicyclo[3.1.1]heptane); PINOACETALDEHYDE (3-(6,6-dimethyl-bicyclo[3.1.1]hept-2-en-2-yl)propanal); PIVAROSE (2,2-dimethyl-2-pheylethyl propanoate); POMAROSE ((2E,5E)-5,6,7-trimethylocta-2,5-dien-4-one); POMELOL FF (2,4,7-Trimethyl-6-octen-1-ol); PRECYCLEMONE B (1-methyl-4-(4-methylpent-3-en-1-yl)cyclohex-3-enecarbaldehyde); PRENYL ACETATE (3-methylbut-2-en-1-yl acetate); PRUNOLIDE (5-pentyldihydrofuran-2(3H)-one); RADJANOL SUPER ((E)-2-ethyl-4-(2,2,3-trimethylcyclopent-3-en-1-yl)but-2-en-1-ol); RASPBERRY KETONE (4-(4-hydroxyphenyl)butan-2-one); RHUBAFURAN (2,4-dimethyl-4-phenyltetrahydrofuran); ROSACETOL (2,2,2-trichloro-1-phenylethyl acetate); ROSALVA (dec-9-en-1-ol); ROSE OXIDE (4-methyl-2-(2-methylprop-1-en-1-yl)tetrahydro-2H-pyran); ROSE OXIDE (4-methyl-2-(2-methylprop-1-en-1-yl)tetrahydro-2H-pyran); ROSYFOLIA (1-methyl-2-(5-methylhex-4-en-2-yl)cyclopropylmethanol); ROSYRANE SUPER (4-methyl-2-phenyl-3,6-dihydro-2H-pyran); SAFRALEINE (2,3,3-trimethyl-1-indanone); SAFRANAL (2,6,6-trimethylcyclohexa-1,3-dienecarbaldehyde); SANDALORE EXTRA (3-methyl-5-(2,2,3-trimethylcyclopent-3-en-1-yl)pentan-2-ol); SERENOLIDE (2-(1-(3,3-dimethylcyclohexyl)ethoxy)-2-methylpropyl cyclopropanecarboxylate); SILVANONE SUPRA (cyclopentadecanone, hexadecanolide); SILVIAL (2-methyl-3-[4-(2-methylpropyl)phenyl]propanal); SPIROGALBANONE (1-(spiro[4.5]dec-6-en-7-yl)pent-4-en-1-one); STEMONE ((E)-5-methylheptan-3-one oxime); STYRALLYL ACETATE (1-phenylethyl acetate); SUPER MUGUET ((E)-6-ethyl-3-methyloct-6-en-1-ol); SYLKOLIDE ((E)-2-((3,5-dimethylhex-3-en-2-yl)oxy)-2-methylpropyl cyclopropanecarboxylate); TERPINENE ALPHA (); TERPINENE GAMMA (1-methyl-4-propan-2-ylcyclohexa-1,4-diene); TERPINEOL (2-(4-methylcyclohex-3-en-1-yl)propan-2-ol); TERPINEOL ALPHA (2-(4-methyl-1-cyclohex-3-enyl)propan-2-ol); TERPINEOL PURE (2-(4-methylcyclohex-3-en-1-yl)propan-2-ol); TERPINOLENE (1-methyl-4-(propan-2-ylidene)cyclohex-1-ene); TERPINYL ACETATE (2-(4-methyl-1-cyclohex-3-enyl)propan-2-yl acetate); TETRAHYDRO LINALOOL (3,7-dimethyloctan-3-ol); TETRAHYDRO MYRCENOL (2,6-dimethyloctan-2-ol); THIBETOLIDE (oxacyclohexadecan-2-one); THYMOL (2-isopropyl-5-methylphenol); TOSCANOL (1-(cyclopropylmethyl)-4-methoxybenzene); TRICYCLAL (2,4-dimethylcyclohex-3-enecarbaldehyde); TRIDECENE-2-NITRILE ((E)-tridec-2-enenitrile); TRIFERNAL (3-phenylbutanal); TROPIONAL (3-(benzo[d][1,3]dioxol-5-yl)-2-methylpropanal); UNDECANONE-2 (undecan-2-one); UNDECATRIENE ((3E,5Z)-undeca-1,3,5-triene); UNDECAVERTOL ((E)-4-methyldec-3-en-5-ol); VANILLIN (4-hydroxy-3-methoxybenzaldehyde); VELOUTONE (2,2,5-trimethyl-5-pentylcyclopentanone); VELVIONE ((Z)-cyclohexadec-5-enone); VIOLET NITRILE ((2E,6Z)-nona-2,6-dienenitrile); YARA YARA (2-methoxynaphtalene); ZINARINE (2-(2,4-dimethylcyclohexyl)pyridine); cedar wood oil; eucalyptus oil; galbanum oil; clove oil; lavandin oil; mandarin oil; orange terpenes; patchouli oil and ylang oil.

The encapsulated functional material may comprise additives, such as solvents, oils, waxes, and pro-fragrances.

The microcapsules as a whole may also be biodegradable, meaning that in addition to the shell, the encapsulated material is also biodegradable This is particularly desirable because after the intended use of a microcapsule composition in a consumer product, it will enter the environment via domestic waste water, and biodegradation is the main process of removal of the material in waste water treatment plants, environmental waters and soils.

A microcapsule maybe considered as biodegradable if both the encapsulating material and the encapsulated functional material are biodegradable according to at least one of the OECD methods mentioned hereinabove.

In particularly preferred embodiments of the present invention, more than 75 wt.-%, preferably more than 80 wt.-%, even more preferably more than 85 wt.-%, even still more preferably more than 90 wt.-%, even yet still more preferably more than 95 wt.-%, and even 100 wt % of the encapsulated functional material is biodegradable.

A non-exhaustive list of biodegradable fragrance ingredients includes ACETOPHENONE EXTRA (1-phenylethanone); ACETYL ISOEUGENOL ((E)-2-methoxy-4-(prop-1-en-1-yl)phenyl acetate); ADOXAL (2,6,10-trimethylundec-9-enal); AGRUMEX (2-(tert-butyl)cyclohexyl acetate); hexanol; decanal; undecanal; ALDEHYDE C 11 MOA (2-methyldecanal); ALDEHYDE C 11 UNDECYLENIC (undec-10-enal); ALDEHYDE C 110 UNDECYLIC (undecanal); ALDEHYDE C 12 LAURIC (dodecanal); ALDEHYDE C 12 MNA (2-methylundecanal); hexanal; octanal; ALDEHYDE C 9 ISONONYLIC (3,5,5-trimethylhexanal); nonanal; ALDEHYDE ISO C 11 ((E)-undec-9-enal); ALLYL AMYL GLYCOLATE (prop-2-enyl 2-(3-methylbutoxy)acetate); ALLYL CAPROATE (prop-2-enyl hexanoate); ALLYL CYCLOHEXYL PROPIONATE (prop-2-enyl 3-cyclohexylpropanoate); ALLYL HEXANOATE (prop-2-enyl hexanoate); ALLYL OENANTHATE (prop-2-enyl heptanoate); AMBERKETAL (3,8,8,11a-tetramethyldodecahydro-1H-3,5a-epoxynaphtho[2,1-c]oxepine); AMBRETTOLIDE ((Z)-oxacycloheptadec-10-en-2-one); AMBROFIX ((3aR,5aS,9aS,9bR)-3a,6,6,9a-tetramethyl-2,4,5,5a,7,8,9,9b-octahydro-1H-benzo[e][1]benzofuran); AMYL BUTYRATE (pentyl butanoate); AMYL CINNAMIC ALDEHYDE ((Z)-2-benzylideneheptanal); AMYL SALICYLATE (pentyl 2-hydroxybenzoate); ANETHOLE ((E)-1-methoxy-4-(prop-1-en-1-yl)benzene); ANISOL ((4-methoxyphenyl)methanol); ANISYLACETATE (4-methoxybenzyl acetate); APHERMATE (1-(3,3-dimethylcyclohexyl)ethyl formate); AUBEPINE PARA CRESOL (4-methoxybenzaldehyde); AURANTIOL PURE ((E)-methyl 2-((7-hydroxy-3,7-dimethyloctylidene)amino)benzoate); benzaldehyde; benzyl acetate; BENZYL ACETONE (4-phenylbutan-2-one); benzyl alcohol; benzyl benzoate; BENZYL CINNAMATE (benzyl 3-phenylprop-2-enoate); BENZYL SALICYLATE (benzyl 2-hydroxybenzoate); BICYCLO NONALACTONE (octahydro-2H-chromen-2-one); BOIS CEDRE ESS CHINE (cedar wood oil); BORNEOL ((1S,2S,4S)-1,7,7-trimethylbicyclo[2.2.1]heptan-2-ol); BORNYL ACETATE ((2S,4S)-1,7,7-trimethylbicyclo[2.2.1]heptan-2-yl acetate); BOURGEONAL (3-(4-(tert-butyl)phenyl)propanal); butyl acetate; BUTYL CYCLOHEXYL ACETATE PARA (4-(tert-butyl)cyclohexyl acetate); CAMPHOR ((1S,4S)-1,7,7-trimethylbicyclo[2.2.1]heptan-2-one); CARVACROL (5-isopropyl-2-methylphenol); CARVONE (2-methyl-5-prop-1-en-2-ylcyclohex-2-en-1-one); CEDRENE ((1S,8aR)-1,4,4,6-tetramethyl-2,3,3a,4,5,8-hexahydro-1H-5,8a-methanoazulene); CEDRYL ACETATE ((1S,6R,8aR)-1,4,4,6-tetramethyloctahydro-1H-5,8a-methanoazulen-6-yl acetate); CEDRYL METHYL ETHER ((1R,6S,8aS)-6-methoxy-1,4,4,6-tetramethyloctahydro-1H-5,8a-methanoazulene); CETONE V ((E)-1-(2,6,6-trimethylcyclohex-2-en-1-yl)hepta-1,6-dien-3-one); CINNAMIC ALCOHOL ((E)-3-phenylprop-2-en-1-ol); CINNAMIC ALDEHYDE ((2E)-3-phenylprop-2-enal); CINNAMYL ACETATE ((E)-3-phenylprop-2-en-1-yl acetate); CIS 3 HEXENOL ((Z)-hex-3-en-1-ol); CIS JASMONE ((Z)-3-methyl-2-(pent-2-en-1-yl)cyclopent-2-enone); CITRAL ((E)-3,7-dimethylocta-2,6-dienal); CITRONELLAL (3,7-dimethyloct-6-enal); CITRONELLOL (3,7-dimethyloct-6-en-1-ol); CITRONELLYLACETATE (3,7-dimethyloct-6-en-1-yl acetate); CITRONELLYL FORMATE (3,7-dimethyloct-6-en-1-yl formate); CITRONELLYL NITRILE (3,7-dimethyloct-6-enenitrile); CLONAL (dodecanenitrile); CORANOL (4-cyclohexyl-2-methylbutan-2-ol); CORYLONE DRIED (2-hydroxy-3-methylcyclopent-2-enone); COSMONE ((Z)-3-methylcyclotetradec-5-enone); COUMARIN (2H-chromen-2-one); CRESYL METHYL ETHER PARA (1-methoxy-4-methylbenzene); CUMIN NITRILE (4-isopropylbenzonitrile); CYCLAMEN ALDEHYDE EXTRA (3-(4-isopropylphenyl)-2-methylpropanal); CYCLOHEXYL ETHYL ACETATE (2-cyclohexylethyl acetate); CYCLOHEXYL SALICYLATE (cyclohexyl 2-hydroxybenzoate); PARA CYMENE (1-methyl-4-propan-2-ylbenzene); DAMASCENONE ((E)-1-(2,6,6-trimethylcyclohexa-1,3-dien-1-yl)but-2-en-1-one); DAMASCONE ALPHA ((E)-1-(2,6,6-trimethylcyclohex-2-en-1-yl)but-2-en-1-one); DECALACTONE GAMMA (5-hexyloxolan-2-one); DECENAL-4-TRANS ((E)-dec-4-enal); DIHYDRO ANETHOLE (1-methoxy-4-propylbenzene); DIHYDRO JASMONE (3-methyl-2-pentylcyclopent-2-enone); DIHYDRO MYRCENOL (2,6-dimethyloct-7-en-2-ol); DELTA CARENE (3,7,7-trimethylbicyclo[4.1.0]hept-3-ene); DIMETHYL ANTHRANILATE (methyl 2-(methylamino)benzoate); DIMETHYL BENZYL CARBINYL ACETATE (2-methyl-1-phenylpropan-2-yl acetate); DIMETHYL BENZYL CARBINYL BUTYRATE (2-methyl-1-phenylpropan-2-yl butanoate); DIMETOL (2,6-dimethylheptan-2-ol); DIPENTENE = LIMONENE (1-methyl-4-(prop-1-en-2-yl)cyclohex-1-ene); DIPHENYL OXIDE (oxydibenzene); DIPHENYL OXIDE (oxydibenzene); DODECALACTONE DELTA (6-heptyltetrahydro-2H-pyran-2-one); DODECALACTONE GAMMA (5-octyloxolan-2-one); DODECENAL ((E)-dodec-2-enal); EBANOL ((E)-3-methyl-5-(2,2,3-trimethylcyclopent-3-en-1-yl)pent-4-en-2-ol); ESTERLY (ethyl cyclohexyl carboxylate); ethyl acetate; ETHYL ACETOACETATE (ethyl 3-oxobutanoate); ETHYL CINNAMATE (ethyl 3-phenylprop-2-enoate); ETHYL HEXANOATE (ethyl hexanoate); ETHYL LINALOOL ((E)-3,7-dimethylnona-1,6-dien-3-ol); ETHYL LINALYL ACETATE ((Z)-3,7-dimethylnona-1,6-dien-3-yl acetate); ETHYL MALTOL (2-ethyl-3-hydroxy-4H-pyran-4-one); ethyl 2-methyl butyrate; ethyl octanoate; ETHYL OENANTHATE (ethyl heptanoate); ETHYL VANILLIN (3-ethoxy-4-hydroxybenzaldehyde); ETHYLENE BRASSYLATE (1,4-dioxacycloheptadecane-5,17-dione); EUCALYPTOL ((1s,4s)-1,3,3-trimethyl-2-oxabicyclo[2.2.2]octane); eucalyptus oil; EUGENOL (4-allyl-2-methoxyphenol); EVERNYL (methyl 2,4-dihydroxy-3,6-dimethylbenzoate); FENCHYL ACETATE ((2S)-1,3,3-trimethylbicyclo[2.2.1]heptan-2-yl acetate); FENCHYL ALCOHOL ((1S,2R,4R)-1,3,3-trimethylbicyclo[2.2.1]heptan-2-ol); FENNALDEHYDE (3-(4-methoxyphenyl)-2-methylpropanal); FIXAMBRENE (3a,6,6,9a-tetramethyldodecahydronaphtho[2,1-b]furan); FLORHYDRAL (3-(3-isopropylphenyl)butanal); FLORIDILE ((E)-undec-9-enenitrile); FLOROSA HC (tetrahydro-4-methyl-2-(2-methylpropyl)-2H-pyran-4-ol); FRESKOMENTHE (2-(sec-butyl)cyclohexanone); FRUTONILE (2-methyldecanenitrile); GALBANONE PURE (1-(5,5-dimethylcyclohex-1-en-1-yl)pent-4-en-1-one); GALBANUM ESS (galbanum oil); GARDENOL (1-phenylethyl acetate); GERANIOL ((E)-3,7-dimethylocta-2,6-dien-1-ol); GERANYL ACETATE ((E)-3,7-dimethylocta-2,6-dien-1-yl acetate); GERANYL ACETONE ((E)-6,10-dimethylundeca-5,9-dien-2-one); GERANYL CROTONATE (ethyl but-2-enoate); GERANYL ISOBUTYRATE ((E)-3,7-dimethylocta-2,6-dien-1-yl 2-methylpropanoate); clove oil; HABANOLIDE ((E)-oxacyclohexadec-12-en-2-one); HEDIONE (methyl 3-oxo-2-pentylcyclopentaneacetate); HELIOTROPINE CRYSTALS (benzo[d][1,3]dioxole-5-carbaldehyde); HEXENAL-2-TRANS ((E)-hex-2-enal); HEXENOL-3-CIS ((Z)-hex-3-en-1-ol); HEXENYL-3-CIS ACETATE ((Z)-hex-3-en-1-yl acetate); HEXENYL-3-CIS BUTYRATE ((Z)-hex-3-en-1-yl butanoate); HEXENYL-3-CIS ISOBUTYRATE ((Z)-hex-3-en-1-yl 2-methylpropanoate); HEXENYL-3-CIS SALICYLATE ((Z)-hex-3-en-1-yl 2-hydroxybenzoate); hexyl acetate; HEXYL BUTYRATE (hexyl butanoate); HEXYL CINNAMIC ALDEHYDE ((E)-2-benzylideneoctanal); HEXYL ISOBUTYRATE (hexyl 2-methylpropanoate); HEXYL SALICYLATE (hexyl 2-hydroxybenzoate); HYDROXYCITRONELLAL SYNTHETIC (7-hydroxy-3,7-dimethyloctanal); INDOLE (1H-indole); INDOLENE (8,8-di(1H-indol-3-yl)-2,6-dimethyloctan-2-ol); IONONE BETA ((E)-4-(2,6,6-trimethylcyclohex-1-en-1-yl)but-3-en-2-one); IRISANTHEME ((E)-3-methyl-4-(2,6,6-trimethylcyclohex-2-en-1-yl)but-3-en-2-one); IRISONE ALPHA ((E)-4-(2,6,6-trimethylcyclohex-2-en-1-yl)but-3-en-2-one); ISOAMYL ACETATE (3-methylbutyl acetate); ISOAMYL BUTYRATE (3-methylbutyl butanoate); ISOBORNYL ACETATE ([(1R,4S,6R)-1,7,7-trimethyl-6-bicyclo[2.2.1]heptanyl] acetate); ISOEUGENOL ((E)-2-methoxy-4-(prop-1-en-1-yl)phenol); ISOJASMONE B 11 (2-hexylcyclopent-2-en-1-one); ISOMENTHONE DL (2-isopropyl-5-methylcyclohexanone); ISOPROPYL METHYL-2-BUTYRATE (isopropyl 2-methylbutanoate); ISORALDEINE ((E)-3-methyl-4-(2,6,6-trimethylcyclohex-2-en-1-yl)but-3-en-2-one); JASMONE CIS ((Z)-3-methyl-2-(pent-2-en-1-yl)cyclopent-2-enone); JASMONYL (3-butyl-5-methyltetrahydro-2H-pyran-4-yl acetate); JASMOPYRANE FORTE (3-pentyltetrahydro-2H-pyran-4-yl acetate); LAITONE (8-isopropyl-1-oxaspiro[4.5]decan-2-one); lavandin and lavender oils); LEMONILE ((2E,6Z)-3,7-dimethylnona-2,6-dienenitrile); LIFFAROME ((Z)-hex-3-en-1-yl methyl carbonate); LILIAL (3-(4-(tert-butyl)phenyl)-2-methylpropanal); LIMONENE (1-methyl-4-prop-1-en-2-ylcyclohexene); LINALOOL (3,7-dimethylocta-1,6-dien-3-ol); LINALOOL OXIDE (2-(5-methyl-5-vinyltetrahydrofuran-2-yl)propan-2-ol); LINALYL ACETATE (3,7-dimethylocta-1,6-dien-3-yl acetate); LONGIFOLENE ((3R,3aR,8R,8aS)-4,4,8-trimethyl-9-methylenedecahydro-3,8-methanoazulene); MAHONIAL ((4E)-9-hydroxy-5,9-dimethyl-4-decenal); MALTOL (3-hydroxy-2-methyl-4H-pyran-4-one); MALTYL ISOBUTYRATE (2-methyl-4-oxo-4H-pyran-3-yl 2-methylpropanoate); mandarin oil; MANZANATE (ethyl 2-methylpentanoate); MAYOL ((4-isopropylcyclohexyl)methanol); MEFROSOL (3-methyl-5-phenylpentan-1-ol); MELONAL (2,6-dimethylhept-5-enal); MENTHOL (2-isopropyl-5-methylcyclohexanol); MENTHONE (5-methyl-2-propan-2-ylcyclohexan-1-one); MERCAPTO-8-METHANE-3-ONE (mercapto-para-menthan-3-one); METHYL ANTHRANILATE (methyl 2-aminobenzoate); METHYL ANTHRANILATE EXTRA (methyl 2-aminobenzoate); METHYL BENZOATE (methyl benzoate); METHYL CINNAMATE (methyl 3-phenylprop-2-enoate); METHYL DIANTILIS (2-ethoxy-4-(methoxymethyl)phenol); METHYL DIHYDRO ISOJASMONATE (methyl 2-hexyl-3-oxocyclopentane-1-carboxylate); METHYL HEPTENONE (6-methylhept-5-en-2-one); METHYL LAITONE (8-methyl-1-oxaspiro[4.5]decan-2-one); METHYL OCTYNE CARBONATE (methyl non-2-ynoate); METHYL SALICYLATE (methyl 2-hydroxybenzoate); MUSCENONE ((Z)-3-methylcyclopentadec-5-enone); MYRALDENE (4-(4-methylpent-3-en-1-yl)cyclohex-3-enecarbaldehyde); MYRCENE 90 (7-methyl-3-methyleneocta-1,6-diene); MYSTIKAL (2-methylundecanoic acid); NECTARYL (2-(2-(4-methylcyclohex-3-en-1-yl)propyl)cyclopentanone); NEOFOLIONE ((E)-methyl non-2-enoate); NEROLEX ((2Z)-3,7-dimethylocta-2,6-dien-1-ol); NEROLIDOL ((Z)-3,7,11-trimethyldodeca-1,6,10-trien-3-ol); NEROLINE CRYSTALS (2-ethoxynaphthalene); NEROLIONE (1-(3-methylbenzofuran-2-yl)ethanone); NERYL ACETATE ((Z)-3,7-dimethylocta-2,6-dien-1-yl acetate); NIRVANOLIDE ((E)-13-methyloxacyclopentadec-10-en-2-one); NONADIENAL ((2E,6Z)-nona-2,6-dienal); NONADIENOL-2,6 ((2Z,6E)-2,6-nonadien-1-ol); NONALACTONE GAMMA (5-pentyloxolan-2-one); NONENAL-6-CIS ((Z)-non-6-enal); NONENOL-6-CIS ((Z)-non-6-en-1-ol); NOPYL ACETATE (2-(6,6-dimethylbicyclo[3.1.1]hept-2-en-2-yl)ethyl acetate); NYMPHEAL (3-(4-(2-methylpropyl)-2-methylphenyl)propanal); OCTALACTONE DELTA (6-propyltetrahydro-2H-pyran-2-one); OCTANONE-2 (octan-2-one); ORANGE TERPENES (orange terpenes); ORANGER CRYSTALS (1-(2-naphtalenyl)-ethanone); PANDANOL ((2-methoxyethyl)benzene); PARA TERT BUTYL CYCLOHEXYL ACETATE (4-(tert-butyl)cyclohexyl acetate); patchouli oil; PEACH PURE (5-heptyldihydrofuran-2(3H)-one); PELARGOL (3,7-dimethyloctan-1-ol); PHARAONE (2-cyclohexylhepta-1,6-dien-3-one); PHENOXANOL (3-methyl-5-phenylpentan-1-ol); PHENOXY ETHYL ISOBUTYRATE (2-(phenoxy)ethyl 2-methylpropanoate); PHENYL ACETALDEHYDE (2-phenyl-ethanal); PHENYL ETHYL ACETATE (2-phenylethyl acetate); PHENYL ETHYL ALCOHOL (2-phenylethanol); PHENYL ETHYL ISOBUTYRATE (2-phenylethyl 2-methylpropanoate); PHENYL ETHYL PHENYL ACETATE (2-phenylethyl 2-phenylacetate); PHENYL PROPYL ALCOHOL (3-phenylpropan-1-ol); PINENE ALPHA (2,6,6-trimethylbicyclo[3.1.1]hept-2-ene); PINENE BETA (6,6-dimethyl-2-methylenebicyclo[3.1.1]heptane); PINOACETALDEHYDE (3-(6,6-dimethylbicyclo[3.1.1]hept-2-en-2-yl)propanal); POMAROSE ((2E,5E)-5,6,7-trimethylocta-2,5-dien-4-one); POMELOL FF (2,4,7-Trimethyl-6-octen-1-ol); PRECYCLEMONE B (1-methyl-4-(4-methylpent-3-en-1-yl)cyclohex-3-enecarbaldehyde); PRENYL ACETATE (3-methylbut-2-en-1-yl acetate); PRUNOLIDE (5-pentyldihydrofuran-2(3H)-one); RASPBERRY KETONE (4-(4-hydroxyphenyl)butan-2-one); ROSALVA (dec-9-en-1-ol); ROSE OXIDE (4-methyl-2-(2-methylprop-1-en-1-yl)tetrahydro-2H-pyran); ROSYRANE SUPER (4-methyl-2-phenyl-3,6-dihydro-2H-pyran); SAFRANAL (2,6,6-trimethylcyclohexa-1,3-dienecarbaldehyde); SANDALORE EXTRA (3-methyl-5-(2,2,3-trimethylcyclopent-3-en-1-yl)pentan-2-ol); SILVANONE SUPRA (cyclopentadecanone, hexadecanolide); SILVIAL (2-methyl-3-[4-(2-methylpropyl)phenyl]propanal); STYRALLYL ACETATE (1-phenylethyl acetate); SUPER MUGUET ((E)-6-ethyl-3-methyloct-6-en-1-ol); SYLKOLIDE ((E)-2-((3,5-dimethylhex-3-en-2-yl)oxy)-2-methylpropyl cyclopropanecarboxylate); TERPINENE ALPHA (1-methyl-4-propan-2-ylcyclohexa-1,3-diene); TERPINENE GAMMA (1-methyl-4-propan-2-ylcyclohexa-1,4-diene); TERPINEOL (2-(4-methylcyclohex-3-en-1-yl)propan-2-ol); TERPINEOL ALPHA (2-(4-methyl-1-cyclohex-3-enyl)propan-2-ol); TERPINEOL (2-(4-methylcyclohex-3-en-1-yl)propan-2-ol); TERPINOLENE (1-methyl-4-(propan-2-ylidene)cyclohex-1-ene); TERPINYL ACETATE (2-(4-methyl-1-cyclohex-3-enyl)propan-2-yl acetate); TETRAHYDRO LINALOOL (3,7-dimethyloctan-3-ol); TETRAHYDRO MYRCENOL (2,6-dimethyloctan-2-ol); THIBETOLIDE (oxacyclohexadecan-2-one); THYMOL (2-isopropyl-5-methylphenol); TOSCANOL (1-(cyclopropylmethyl)-4-methoxybenzene); TRIDECENE-2-NITRILE ((E)-tridec-2-enenitrile); TRIFERNAL (3-phenylbutanal); TROPIONAL (3-(benzo[d][1,3]dioxol-5-yl)-2-methylpropanal); UNDECANONE-2 (undecan-2-one); UNDECATRIENE ((3E,5Z)-undeca-1,3,5-triene); UNDECAVERTOL ((E)-4-methyldec-3-en-5-ol); VANILLIN (4-hydroxy-3-methoxybenzaldehyde); VELVIONE ((Z)-cyclohexadec-5-enone); VIOLET NITRILE ((2E,6Z)-nona-2,6-dienenitrile); YARA YARA (2-methoxynaphtalene); cedar wood oil; eucalyptus oil; galbanum oil; clove oil; lavandin oil; mandarin oil; orange terpenes; patchouli oil and ylang oil. These ingredients have the advantage of providing microcapsules from which the core is biodegradable.

The functional material may be a functional cosmetic ingredient. Particularly useful functional cosmetic ingredients may be selected from the group consisting of emollients, smoothening ingredients, hydrating ingredients, soothing and relaxing ingredients, decorative ingredients, deodorants, anti-aging ingredients, cell-rejuvenating ingredients, draining ingredients, remodeling ingredients, skin levelling ingredients, preservatives, antioxidants, antibacterial or bacteriostatic ingredients, cleansing ingredients, lubricating ingredients, structuring ingredients, hair conditioning ingredients, whitening ingredients, texturing ingredients, softening ingredients, anti-dandruff ingredients, and exfoliating ingredients.

Particularly useful functional cosmetic ingredients include, but are not limited to; vegetable oils, such as Argan oil, Jojoba oil, Aloe vera oil, and the like; fatty acids and fatty alcohols and their esters; glycolipides; phospholipides; sphingolipides, such as ceramides; sterols and steroids; terpenes, sesquiterpenes, triterpenes and their derivatives; essential oils, such as Arnica oil, Artemisia oil, Bark tree oil, Birch leaf oil, Calendula oil, Cinnamon oil, Echinacea oil, Eucalyptus oil, Ginseng oil, Jujube oil, Helianthus oil, Jasmine oil, Lavender oil, Lotus seed oil, Perilla oil, Rosmary oil, Sandal wood oil, Tea tree oil, Thyme oil, Valerian oil, Wormwood oil, Ylang Ylang oil, and Yucca oil.

In particular, the at least one functional cosmetic ingredient may be selected from the group consisting of Sandal wood oil, such as Fusanus Spicatus kernel oil; panthenyl triacetate; tocopheryl acetate; tocopherol; Naringinin; ethyl linoleate; farnesyl acetate; farnesol; citronellyl methyl crotonate; and ceramide-2 (1-stearoiyl-C18-sphingosine, CAS-No: 100403-19-8).

The amount of water employed in the microcapsule compositions is typically in the range of 1 to 99 wt.-%, more particularly 3 to 70 wt.-%.

The microcapsule composition may be in the form of a slurry, a cake or an extrudate.

When the microcapsule composition is intended to be presented in the form of a slurry, it will typically comprise about 30 to 85 wt.-%, more particularly 50 to 75 wt.-%, still more particularly 55 to 70 wt.-% of water, and from 0.01 to 5 wt.-%, more particularly 0.05 to 2.5 wt.-% of preservation system comprising at least one non-partitioning preservation agent, based on the weight of the microcapsule composition.

Alternatively, when the microcapsule composition is intended to be presented in the form of a cake or an extrudate, it will typically comprise about 1 to 10 wt.-%, more particularly 1 to 5 wt.-% of water and from 0.01 to 5 wt.-%, more particularly 0.05 to 4 wt.-% of preservation system comprising at least one non-partitioing preservation agent, based on the weight of the microcapsule composition..

With regard to the aforementioned values, the weight percentage is based on the total weight of the microcapsule composition.

The weight of the functional material expressed as a percentage of the total weight of the microcapsules, that is, the sum of the weight of the functional material, and the material encapsulating it, is at least 20 wt.-%, preferably at least 30 wt.-%, more preferably at least 40 wt.-%, still more preferably at least 50 wt.-%, still more preferably at least 60 wt.-%, still more preferably at least 70 wt.-%, still more preferably at least 80 wt.-%, even more preferably at least 90 wt.-%.

In its second aspect, the invention provides the use of anti-microbial preservation systems to prevent or reduce the premature leakage of functional material from a microcapsule composition comprising a biodegradable encapsulating material. It is understood that any of the anti-microbial preservation agents and systems described herein above may be employed in this aspect of the invention.

In its third aspect, the invention provides a method of reducing or eliminating the premature leakage, especially during transportation and storage, of encapsulated functional material from a microcapsule composition comprising a biodegradable encapsulating material, said method comprising the step of adding an anti-microbial preservation system to said composition, said anti-microbial preservation system comprising at least one non-partitioning preservation agent.

In particular embodiments the method comprises the step of adding to the microcapsule composition at least one non-partitioning preservation agent of a) through i) with the intention to destroy, make harmless or control the growth of an unwanted microorganisms and thereby to prevent or reduce the leakage of encapsulated functional material caused by the micro-organism mediated degradation of the microcapsules.

In more particular embodiments:

a) the weight ratio of the added carboxylic and hydroxycarboxylic acids and their conjugate bases to the microcapsules is from 0.0005 to 0.4, more particularly from 0.001 to 0.2.

b) the weight ratio of the added hydroxy esters, such as lactic acid monoesters, to the microcapsules is from 0.0001 to 0.02, more particularly from 0.0005 to 0.004;

c) the weight ratio of the added alcohols and polyols, more particularly diols, still more particularly 1,2-diols, and mixtures thereof to the microcapsules is from 0.001 to 0.4, more particularly from 0.005 to 0.2;

d) the weight ratio of the added hydroxypyrones and hydroxylactones to microcapsules is from 0.0005 to 0.1, more particularly from 0.001 to 0.04;

e) the weight ratio of the added phenols, phenolic derivatives and polyphenols to the micorcapsules is from 0.0005 to 0.1, more particularly from 0.001 to 0.04;

f) the weight ratio of the added formaldehyde releasers to the microcapsules is from 0.0001 to 0.04, more particularly from 0.0005 to 0.02;

g) the weight ratio of the added nitrogen-containing compound, more particularly isothiazolinones and alkaloids to the microcapsules is from 0.000005 to 0.00004, more particularly from 0.00001 to 0.00002;

h) the weight ratio of the added surfactant to the microcapsules is from 0.001 to 0.2, more particularly from 0.01 to 0.1; and

i) the weight ratio of the added quaternized or protonated amines to the microcapsules is from 0.0005 to 0.05, more particularly from 0.001 to 0.02;

wherein the microcapsule weight is defined as being equivalent to the solid content of the microcapsule composition.

In preferred embodiments of the present invention, the at least one preservation agent to be added to the microcapsule composition is selected from any one of groups c. to h., is non-ionic and has a ClogP of 1.0 or less, more

particularly 0.5 or less, still more particularly 0.0 or less, still more particularly -0.5 (minus 0.5) or less.

In particular embodiments, the at least one non-ionic preservation agents to be added to the microcapsule composition is selected from diols, more particularly a 2-methyl-2,4-pentanediol (ClogP=-0.02) and 1,2-alkyldiols, such as 1,2-propanediol (ClogP=-1.06), 1,2-butanediol (ClogP=-0.53), 1,2-pentanediol (ClogP=-0.002); and 1,2-hexanediol (ClogP=0.53).

In particular embodiments of the present invention, the at least one preservation agent to be added to the microcapsule composition is a conjugate acid-base pair. The conjugate acid-base pair may be derived from a weak acid or from the salt of a weak acid, provided the weak acid, protonated form has a ClogP of 1.00 or less, more particularly 0.50 or less, still more particularly 0.00 or less, still more particularly -0.50 or less.

Conjugate acid-base pairs that are useful for the purpose of the present invention are described in more details hereinabove.

These preservations agents may be added to the microcapsules alone or in combination, as described in more details hereinabove.

In yet another aspect, the invention provides a microcapsule composition obtainable by the method described herein.

The microcapsule compositions of the present invention can be generally prepared according to techniques known in the art. For example, core-shell microcapsules are formed when a material that is capable of forming an encapsulating shell by a physicochemical process, present at the interface of droplets of functional material dispersed in an aqueous phase, is made impervious by physicochemical processes, leading to the encapsulation of the oil droplets containing an functional material to be encapsulated. These physicochemical processes include, for instance, phase separation, polymer-polymer complexation, simple and complex coacervation, cross-linking, and combinations thereof.

By "material that is capable of forming an encapsulating shell by a physicochemical process" is meant a material that comprises at least one biopolymer and, optionally, one or more cross-linking agents.

An illustrative method for preparing a microcapsule composition of the core-shell capsule type, comprises the steps of:

a) providing a core composition comprising a functional material;

b) providing an aqueous phase;

c) emulsifying the core composition into the aqueous phase in order to form core composition-in-water emulsion droplets;

d) forming a shell of encapsulating material at the oil/water interface of the emulsion droplets, in order to obtain a slurry of microcapsules; and

e) adding a preservation system comprising at least one non-partitioning preservation agent.

With regard to step a) and b), the materials used in preparing the shell may be contained in either the core composition or the aqueous phase, or they may be distributed between both phases, in a manner that will depend upon the shell chemistry and process conditions.

With regard to step b), the aqueous phase may comprise processing aids, such as a polymeric surfactant or emulsifier, to assist in the stabilization of the emulsion formed in step c).

With regard to step d), the shell may be formed by phase separation of the encapsulating material(s) from the core phase and/or the aqueous phase, by polymer-polymer complex formation, and by simple and/or complex coacervation. Typically, the shell is further cross-linked by adding a chemical cross-linking agent.

With regard to step e), the pH of the slurry is preferably adjusted to a value from 2 to 9, more particularly 3.5 to 6.

In particular embodiments, step e) is followed by a filtration or flotation step, in order to separate the microcapsules from the slurry.

In particular embodiments, the functional material is not provided at step a), but after the slurry obtained in step e) has been dried. In this case, the functional material can be caused to diffuse into the core of the microcapsules, for example by a method disclosed in WO200103825A1, which microcapsule loading method is herein incorporated by reference.

An alternative illustrative method for preparing a microcapsule composition of the present invention, wherein the functional material is dispersed in an encapsulating matrix, comprises the steps of:

a) providing a functional material;

b) providing an aqueous phase comprising a biodegradable encapsulating material;

c) emulsifying the core composition into the aqueous phase in order to form an emulsion consisting of droplets of functional material in an external aqueous phase comprising the biodegradable encapsulating material;

d) droping the emulsion in a solution comprising a cross-linking agent, in order to obtain a microcapsule composition in particulate form.

wherein the preservation system comprising at least one non-partitioning preservation agent is added to the aqueous phase in step b), to the emulsion formed in step c) or to the solution comprising the cross-linking agent in step c).

An alternative method for preparing a microcapsule composition of the present invention, wherein the functional material is dispersed in an encapsulating matrix, comprises the steps of:

a) providing a core composition, optionally comprising a functional material;

b) incorporating the core composition provided in step a) into a matrix comprising a biodegradable encapsulating material and water, by employing an extruder, in order to form an extrudate;

c) cooling and cutting the extrudate in order to obtain solid pieces.

wherein the preservation system comprising at least one non-partitioning preservation agent is added to the matrix of step b) or to the solid pieces obtained in step c).

When a microcapsule composition is presented in the form of a cake or an extrudate, it can additionally comprise a solid carrier in which the powder microcapsule composition is suspended. The solid carrier can be selected from the group consisting of urea, sodium chloride, sodium sulphate, sodium acetate, zeolite, sodium carbonate, sodium bicarbonate, clay, talc, calcium carbonate, magnesium sulfate, gypsum, calcium sulfate, magnesium oxide, zinc oxide, titanium dioxide, calcium chloride, potassium chloride, magnesium chloride, zinc chloride, saccharides, polyethylene glycol, polyvinylpyrrolidone, citric acid or any water soluble solid acid, fatty alcohols, fatty acids and mixtures thereof.

Optionally, the preservation system comprising at least one non-partitioning preservation agent may be added to mixture of microcapsules and solid carrier.

Diluting the microcapsule composition in a carrier material can provide formulations that are compliant with dust explosion regulations, as it is known that the explosion risk increases with the concentration of the perfume ingredients in the powder.

When a solid carrier is used, the proportion of the microcapsule composition can be 0.1 to 50 wt.-%, preferably 1 to 30 wt.-%, even more preferably 3 to 15 wt.-%, relative to the weight of the total composition. The proportion of the solid carrier can be 10 to 99.9 wt.-%, preferably 30 to 97 wt.-%, even more preferably 50 to 95 wt.-%, relative to the weight of the total composition. Under such conditions, the powder may be maintained below critical explosion values, in terms of explosive class and minimal ignition energy value.

As an alternative or in addition to a solid carrier, a powder formulation according to the present invention can also comprise a flowing agent. The flowing agent is selected from the group consisting of silicon dioxide, sodium salts, calcium salts and zeolites. Flowing agents limit the risk of powder agglomeration and clogging, and ease the transfer of the encapsulated composition from one vessel to another during handling operations.

In its fourth aspect, the present invention provides a consumer product comprising the microcapsule composition described herein. The microcapsule composition is used to deliver a functional material, such as a fragrance material to all manner of consumer products.

In particular, the microcapsule compositions are useful to deliver fragrance formulations and other laundry actives, such as enzymes to consumer products including laundry care detergents, laundry care conditioners, fabric refreshers, scent boosters, personal care compositions, such as shampoos, bath and shower gels, liquid soaps, soap bars, personal care conditioning composition, such as hair care conditioners, bath and shower lotions, deodorant compositions, antiperspirant compositions, home care compositions, such as hard surface cleaners, and heavy duty detergents.

A consumer product can contain the microcapsule compositions as described herein above, preferably at a level of 0.005 to 5 wt.-%, more preferably from 0.01 to 1 wt.-% and still more preferably from 0.02 to 0.5 wt.-% of the consumer product.

The use of a microcapsule composition as herein defined to deliver a functional material from a consumer product represents yet another aspect of the present invention.

There now follows a series of examples that further serve to illustrate the invention.

## EXAMPLES

The following is a preferred way for conducting OECD Method 301F.

Principle:

A measured volume of inoculated mineral medium, containing a known concentration of test substance as the nominal sole source of organic carbon, is stirred in a closed flask at a constant temperature. Evolved carbon dioxide is absorbed in sodium hydroxide pellets. The consumption of oxygen is determined by measuring the pressure drop in the respirometer flask. The Biological Oxygen Demand (BOD), the amount of oxygen taken up by the microbial population during biodegradation of the test chemical (corrected for uptake by blank inoculum, run in parallel), is expressed as a percentage of ThOD (Theoretical Oxygen Demand, calculated from the elemental composition, assuming that carbon is oxidized to carbon dioxide, hydrogen to water and nitrogen to ammonium, nitrite or nitrate).

The shell material of a fragrance-containing microcapsule composition is submitted to biodegradation testing after having been separated from the microcapsule composition core contents by (i) breaking the fragrance mechanically or by sonication, (ii) extracting the core phase by a suitable solvent, for example hexane, methyl-tert-butyl ether or ethyl acetate, preferably methyl-tert-butyl ether, and (iii) eliminating the solvent by evaporation.

## Apparatus:

The respirometer used is an Oxitop Control System, made by Wissenschaftlich-Technische Werkstätten (WTW), Weilheim, Germany.

Water:

The water used is ultrapure water, containing less than 5 ppb total organic carbon, produced by using a Millipore Direct-Q 3 UV purification system.

Stock solutions of mineral components:

Solution A:

| | |
|---|---|
| $KH_2PO_4$ | 8.5 g |
| $K_2HPO_4$ | 21.75 g |
| $Na_2HPO_4 \cdot 2\ H_2O$ | 33.4 g |
| $NH_4Cl$ | 0.5 g |
| dissolved in water and made up to 1 liter. | |

Solution B:

| | |
|---|---|
| $CaCl_2$ | 27.5 g |
| dissolved in water and made up to 1 liter. | |

Solution C:

| | |
|---|---|
| $MgSO_4 \cdot 7\ H_2O$ | 22.5 g |
| dissolved in water and made up to 1 liter. | |

Solution D:

| | |
|---|---|
| $FeCl_3 \cdot 6\ H_2O$ | 0.25 g |
| HCl Conc. | one drop |
| dissolved in water and made up to 1 liter. | |

## Mineral Medium:

The mineral medium is prepared by mixing 50 ml of solution A and 2 liters deionized water, adding 5 ml of each of the solutions B, C and D and making up to 5 liters with deionized water. The pH is measured and if necessary adjusted to 7.4 $\pm$ 0.2 with phosphoric acid or potassium hydroxide.

Inoculum:

Fresh activated sludge from a biological waste water treatment plant treating predominantly domestic sewage (Bois-de-Bay, Satigny, Switzerland) is used.

The sludge is collected in the morning, washed three times in the mineral medium (by centrifuging at 1000 g for 10 minutes, discarding the supernatant and re-suspending in mineral medium) and kept aerobic until being used on the same day.

Determination of the dry weight of suspended solids:

The dry weight of suspended solids is determined by taking two 50 ml samples of the homogenized sludge, evaporating water on a steam bath, drying in an oven at 105 to 110 °C for two hours and weighing the residue.

Reference Substance:

Sodium benzoate (Fluka, Buchs, Switzerland, Art. No. 71300), purity: min. 99.0%.

Preparation of the Flasks:

Test substance samples (corresponding to 30.0 mg/l in 255 ml of test medium) are weighed in small aluminum boats and added directly to the test flasks of the Oxitop. For reference substance samples 12.75 mg (corresponding to 50.0 mg/l in 255 ml of test medium) are weighed in small aluminum boats and added directly to the test flasks of the Oxitop.

Flasks are filled with 250 ml of mineral medium. Samples of test or reference substance are added. Then 5.00 ml of suspended sludge diluted to a concentration of 1.53 g/l dry matter is added. Except when the test substance had an acid or alkaline character, the pH of each flask is not measured but assumed to be the same as the mineral medium, in order not to remove any floating undissolved test substance from the test medium by dipping a glass electrode in it. Neutral test substances, even sodium benzoate, were shown not to affect the pH of the medium by more than 0.1 pH unit. Two sodium hydroxide pellets are placed in the quivers on top of the bottle, and the flasks are closed tightly with the measuring heads. The flasks are allowed to equilibrate to the test temperature. The measurement is started by programming the measuring unit of the Oxitop test flasks, and the test flasks are placed in the temperature controlled cupboard of the Oxitop system. After temperature equilibration, the controller of the instrument started data acquisition (time zero of the experiment).

Test Temperature:

The test temperature is 21.5 $\pm$ 0.5 °C.

Performance of the Test:

Every day the oxygen consumption of each flask is recorded, and correct temperature and stirring are checked. At the end of the test period (normally 28 days), the pH of each flask is measured again.

The biodegradation for each data point is calculated as follows:

$$D = (C-B)/ThOD \cdot 100\%$$

| | |
|---|---|
| D: | Biodegradation of sample |
| C: | $O_2$ uptake of sample and sludge |
| B: | $O_2$ uptake of sludge (inoculum blank) |
| ThOD: | Theoretical oxygen demand |

The pass level for *"readily biodegradable"* is to reach 60 % of theoretical oxygen demand (ThOD). This pass value has to be reached in a 10-day window within the 28-day period of the test. The 10-day window begins when the degree of biodegradation has reached 10% of theoretical oxygen demand (ThOD) and must end before day 28 of the test.

The pass level for *"inherently biodegradable"* is also 60 % of theoretical oxygen demand (ThOD). However, this pass value can be reached after the 28-day period of the test, which is usually extended to 60 days. No 10-day window applies.

Further features and particular advantages of the present invention become apparent from the following examples.

Example 1: Comparison between preservation systems.

Core-shell microcapsules comprising medium chain triglycerides (Miglyol 812) and a fragrance were obtained by applying the method described in WO 2001/03825 A1, Example 2. This method comprises the steps of:

a) Forming a slurry of blank core-shell microcapsules by complex coacervation of gelatin and carboxymethylcellulose having medium chain glycerides as core phase;

b) Drying the microcapsules;

c) Admixing 54.2 wt.-% of the dry microcapsules with 41.8 wt.-% of a fragrance oil in the presence of 4 wt.-% of deionized water in order to allow the fragrance oil to penetrate the blank core-shell microcapsules in order to obtain core-shell microcapsules comprising a mixture of both medium chain triglycerides and a fragrance as core phase.

The level of water in the shell after step c) has been performed is about 4 wt.-% with respect to the total weight of the microcapsules and the pH was 5.5.

In the present example, various preservation systems were added to the amount of water added in step c) at the levels reported on Table 1. The samples were stored for 3 months and then submitted to biological challenge tests, wherein they were inoculated with a cocktail of four bacteria *Pseudomonia aeruginosa, Staphylococus aureus, Bacillus amyloliquefaciens* and *Escherichia colis,* and three fungi *Candidia albican,* (yeast), *Cephaloascus Albidus* (yeast) and *Aspergillus brasiliensis* (mold), according to the standard method of the European Pharmacopeia Xth edition, monographie 5.1.3. "Efficacy of antimicrobial preservation" with the pass criteria according to Table 5.1.3-2. The initial number of 500’000 colony forming units (cfu) per gram of sample (cfu value). The microorganism reduction factor is expressed as the difference between the logarithm of the cfu value after 2 days and the logarithm of the initial cfu value and was calculated for each of the bacteria used. The tests were considered to have been passed successfully if the reduction factor was larger than 2 for all tested microorganisms.

Table 1: Preservation of gelatin/CMC core-shell microcapsules

| Sample | Phenoxyethanol [wt.-% (2)] | 1,2-propanediol [wt.-% (2)] | Lactic acid and sodium benzoate (1) [wt.-% (2)] | Challenge test compliance |
|---|---|---|---|---|
| 1.1 | 0 | 0 | 0 | Failed |
| 1.2 | 2.5 | 0 | 0 | Failed |
| 1.3 | 2.5 | 2 | 0 | Passed |
| 1.4 | 2.5 | 4 | 0 | Passed |
| 1.5 | 0 | 0 | 1.1 | Passed |
| 1.6 | 0 | 0 | 2.0 | Passed |

(1) Initial lactic acid to sodium benzoate weight ratio = 0.6
(2) based on the total weight of the microcapsule composition. The corresponding preservation agent to capsule weight ratios can be obtained by dividing the wt.-% values in Table 1 by 96.

As apparent from Table 1, the microcapsules containing phenoxyethanol alone as partitioning preservation agent did not pass the challenge test, whereas the microcapsules containing non-partitioning 1,2-propanediol or a conjugate acid base pair passed the challenge test.

Example 2: Preparation of Cellulose Microcapsules

Cellulose microcapsules have been prepared by performing the steps of:

a) Preparing a core composition by admixing 0.66 g of bipodal aminosilane (bis(3-triethoxysilylpropyl)amine), 0.48 g of Takenate D-110N (ex Mitsui) and 38.5 g of perfume composition;

b) Emulsifying the core composition obtained in step a) in a mixture of 1.35 g a grade of highly methoxylated pectin (of type APA 104, ex Roeper) in 66.2 g of water by using a 300 ml reactor and a cross-beam stirrer with pitched beam operating at a stirring speed of 800 rpm at a temperature of 25 +/- 2 °C for 10 min;

c) Adjusting the pH of the continuous phase of the emulsion to 6.5 +/- 0.5 with a 10% sodium hydroxide solution in water and maintaining the system at a temperature of 25 +/- 2 °C for 1 h while maintaining stirring as in step b);

d) Increasing progressively the temperature to 85 °C over 2.5 h and maintaining the temperature at 85 °C for 1 h,

while maintaining stirring as in steps b) and c) to complete the formation of core-shell capsules;

e) Adding 1.8 g of 2-hydroxyethyl cellulose and continue stirring for 30min at 85 °C;

f) Adding 0.8 g of a solution of citric acid diluted at 30 % in water and continue stirring for 1 h at 85 °C;

g) Letting the slurry of core-shell capsules obtained in step f) cool to room temperature.

The solids content of each slurry was measured by using a thermo-balance operating at 120 °C. The solids content, expressed as weight percentage of the initial slurry deposited on the balance was taken at the point where the drying-induced rate of weight change had dropped below 0.1 %/min.

The solids content of the slurry was 40 wt.-% based on the total weight of the slurry and the volume median size Dv(50) of the microcapsules was 20 $\mu$m.

Example 3: Preparation of Gelatin Coacervate Microcapsules

Gelatin coacervate microcapsules have been prepared by performing by performing the steps of:

a) Providing 165 g of a core composition consisting of medium chain triglycerides Miglyol 812, ex Oleo;

b) Providing a first aqueous phase by dissolving 16.5 g Type B fish gelatin in 148.5 g of deionized water at a temperature of 40 °C;

c) Providing a second aqueous phase by dissolving 1.6 g of carboxymethylcellulose in 77.9 g of deionized water at a temperature of 40 °C;

d) Adding the core composition to the first aqueous phase under stirring at 300 rpm, by using a stir paddle, and maintaining the stirring for 30 minutes in order to obtain an emulsion;

e) Adding the second aqueous phase to the emulsion obtained in step d) under stirring;

f) Adding 475 g of deionized water, pre-heated to 40 °C, while maintaining stirring;

g) Adjusting the pH of the emulsion to the coacervation pH of 5.2 $\pm$ 0.5 by using a 50 wt.-% citric acid solution and cooling the emulsion to 28 $\pm$ 1°C at a rate of 1 °C per 5 min in order to form a slurry of core-shell microcapsules;

h) Cooling the slurry formed in g) to a temperature of 20 $\pm$ 5 °C;

i) Adding 0.26 g of glutaraldehyde and letting the slurry under stirring overnight (about 15 hours) in order to obtain a slurry of cross-linked core-shell microcapsules.

The solids content of the slurry was 32 wt.-% based on the total weight of the slurry and the volume median size Dv(50) of the microcapsules was 40 $\mu$m.

Example 4: Partitioning of the preservation systems

In this Example, 2 wt.-% of phenoxy ethanol or 1.5 wt.-% of lactic acid and 0.5% of potassium sorbate, based on the weight of the aqueous phase were added to each of the microcapsule slurries obtained in Example 2 and 3. These values correspond to a preservation agent to dry capsule weight ratios of 0.03 and 0.0425 for phenoxy ethanol in Example 2 and Example 3, respectively; 0.0225 and 0.032 for lactic acid in Example 2 and Example 3, respectively; and 0.0075 and 0.011 for potassium sorbate in Example 2 and Example 3, respectively. The amount of phenoxyethanol remaining in the aqueous phase of the slurries at 25 °C as a function of time was determined analytically by mild extraction with heptane, followed by GC/MS analysis. The total amount of the remaining acid base conjugates in the aqueous phase was estimated from the pH and material balance.

The results are reported in Table 2.

Table 2: Percentage of phenoxyethanol and acid base conjugate pairs in the aqueous phase as a function of time, in weight %, based on the total weight of aqueous phase.

| | Slurry of Example 2 with 2 wt.-% added phenoxyethanol | Slurry of Example 2 with 2 wt.-% added acid base conjugates (pH = 5.7) | Slurry of Example 3 with 2 wt.-% added phenoxyethanol | Slurry of Example 3 with 2 wt.-% added acid base conjugates (pH = 5) |
|---|---|---|---|---|
| T = 0 | 0.4 | 2.0 | 1.0 | 2.0 |
| T = 2 weeks | 0.3 | 2.0 | 1.0 | 1.9 |
| T = 4 weeks | 0.25 | 1.9 | 0.9 | 1.9 |

As apparent from the results in Table 2, a significant partitioning of phenoxyethanol between the aqueous phase and the microcapsules occurred spontaneously in both slurries, although this phenomenon was more rapid and more pronounced in the case of the cellulose capsules compared to gelatin coacervate capsules. This fast process was followed by a slower equilibration over time, which was also slightly faster for the cellulose capsules. This confirms that the level of microbiologically active preservation agent in the aqueous phase decreases with time, making the slurries more prone to microbiological contamination.

In contrast to the case of phenoxyethanol, the conjugate acid-base pairs remained in the aqueous phase and effectively preserved the slurry against microbiological contamination and subsequent biodegradation-induced capsule leakage.

Example 5: Preservation of the microcapsule slurries of Examples 2

In this example, the pH of the microcapsule slurries obtained in Example 2 has been adjusted pH = 4 and pH = 6 with hydrochloric acid and pH = 8 with ammonia. These slurries were split in two sets samples.

In a first set of samples (comparative Examples 2.1 to 2.3 and Examples according to the present invention 2,4 to 2.6), various amounts of preservation agents (see Table 3) were added to 100 g of slurry, and a challenge test was performed immediately after addition of the one or more preservation agents. The results are reported in Table 3.

In a second set of samples (comparative Examples 2.7 to 2.9 and Examples according to the present invention 2.10 to 2.12), various amounts of preservation agents (see Table 3) were added to 100 g of slurry, and a challenge test was performed after these slurries have been stored at a temperature at 40 °C for three months. The results are reported in Table 4.

Table 3 Results of the initial challenge test

| Sample | pH | Preservation system | Preservation agent to dry capsule weight ratio | Passed the challenge test compliance |
|---|---|---|---|---|
| 2.1 [a] | 4 | 1.5 g phenoxyethanol | 0.0375 | Yes |
| 2.2 [a] | 6 | 1.5 g phenoxyethanol | 0.0375 | Yes |
| 2.3 [a] | 8 | 1.5 g phenoxyethanol | 0.0375 | No |
| 2.4 | 4 | 1 g 1,2- pentanediol and 0.5 g phenoxyethanol | 0.025<br>0.0125 | Yes |
| 2.5 | 6 | 1 g 1,2- pentanediol and 0.5 g phenoxyethanol | 0.025<br>0.0125 | Yes |
| 2.6 | 8 | 1 g 1,2- pentanediol and 0.5 g phenoxyethanol | 0.025<br>0.0125 | Yes |

Table 4 Results of the challenge test performed after 3 months storage at 40 °C

| Sample | pH | Preservation system | Preservation agent to dry capsule weight ratio | Passed the challenge test compliance |
|---|---|---|---|---|
| 2.7 [a] | 4 | 1.5 g phenoxyethanol | 0.0375 | No |

(continued)

| Sample | pH | Preservation system | Preservation agent to dry capsule weight ratio | Passed the challenge test compliance |
|---|---|---|---|---|
| 2.8 [a] | 6 | 1.5 g phenoxyethanol | 0.0375 | No |
| 2.9 [a] | 8 | 1.5 g phenoxyethanol | 0.0375 | No |
| 2.10 | 4 | 1 g 1,2- pentanediol and 0.5 g phenoxyethanol | 0.025<br>0.0125 | Yes |
| 2.11 | 6 | 1 g 1,2- pentanediol and 0.5 g phenoxyethanol | 0.025<br>0.0125 | Yes |
| 2.12 | 8 | 1 g 1,2- pentanediol and 0.5 g phenoxyethanol | 0.025<br>0.0125 | Yes |
| [a] comparative example | | | | |

As apparent from the results in Table 3, all slurries withstood a challenge test performed immediately after having added the anti-microbial preservation system to these slurries. However, the protection decreased over time in samples where a partitioning preservation agent (phenoxyethanol alone) was present, whereas this protection was maintained in samples where anti-microbial preservation system comprising at least one non-partitioning preservation agent was present.

## Claims

**1.** A microcapsule composition comprising a plurality of microcapsules, an aqueous phase comprising water and an anti-microbial preservation system, wherein the microcapsule comprises an encapsulated functional material and a biodegradable encapsulating material, and the anti-microbial preservation system comprises at least one preservation agent selected from the group consisting of:

a) Carboxylic, hydroxy-carboxylic acids and their conjugate bases;
b) hydroxy esters, such as lactic acid monoesters;
c) alcohols and polyols, such as ethanol, propanol, isopropanol, glycerol, sorbitol, more particularly diols, still more particularly 1,2-diols, such as 1,3-butylene glycol, 1,3-propylene glycol, and 1,2-alkyldiols having 2 to 7 carbon atoms; and mixtures thereof;
d) hydroxypyrones and hydroxylactones, such as dehydroacetic acid and glucono delta-lactone;
e) phenols, phenolic derivatives and polyphenols, such as palmitoyl-epigallocatechin-3-gallate (ex-green tea extracts) and pyrogallol;
f) formaldehyde releasers, such as formaldehyde, imidazolidinyl urea (CAS 39236-46-9), diazolidinyl urea (CAS 78491-02-8), DMDM Hydantoin (1,3-Bis(hydroxymethyl)-5,5-dimethylimidazolidine-2,4-dione, CAS6440-58-0), Bronopol (2-Brom-2-nitro-1,3-propandiol,(CAS 52-51-7); Bronidox (5-Bromo-5-nitro-1,3-dioxane, CAS 30007-47-7);
g) nitrogen-containing compounds, such as Quaternium-15 (1-(3-Chloroallyl)-3,5,7-triaza-1-azoniaadamantane chloride, CAS 4080-31-3), benzalkonium chloride (CAS 8001-54-5), methanamine (CAS 100-97-0), caprylhydroxamic acid, 2-hydroxyethylenamine, sodium hydroxymethylglycinate; and more particularly isothiazolinones and alkaloids, such as caffeine, nicotinamide, N,N-diethylnicotinamide, and N,N-dimethylbenzamide;
h) surfactants selected from cationic surfactants, such as alkylamine salts, for example alkyl esters of the lauramide of arginine monohydrochloride; anionic surfactants, such as such as alkylbenzyl sulfonates, alkyl sulfates, sulfonates and carboxylates; amphoteric surfactants, such as alkylamidobetains and alkylamidoglycinates; non-ionic surfactants having a Hydrophilic Balance (HLB) from 12 to 20, such as fatty acids monoethanolamides, ethoxylated fatty alcohols and alkyl polyglucosides; and C1-C8 alkyl ethers and esters of ethylene oxide oligomers and glycerol oligomers, also known as solvo-surfactants; and
i) quaternized or protonated amines, such as the alkyl esters of the lauramide of arginine monohydrochloride, alkyldimethylbenzylammonium chloride (ADBAC), alkyldimethylethylbenzylammonium chloride (ADEBAC), and didecylammonium chloride (DDAC); and quaternized or protonated amines;

2. The composition according to claim 1, wherein:

a) the weight ratio of the carboxylic and hydroxycarboxylic acids and their conjugate bases to the microcapsules is from 0.0005 to 0.4, more particularly from 0.001 to 0.2.
b) the weight ratio of the alcohols and polyols, more particularly diols, still more particularly 1,2-diols to the microcapsules is from 0.001 to 0.4, more particularly from 0.005 to 0.2;
c) the weight ratio of the hydroxy esters, such as lactic acid monoesters, to the microcapsules is from 0.0001 to 0.02, more particularly from 0.0005 to 0.004;
d) the weight ratio of the hydroxypyrones and hydroxylactones to the microcapsules is from 0.0005 to 0.1, more particularly from 0.001 to 0.04;
e) the weight ratio of the phenols, phenolic derivatives and polyphenols to the microcapsules is from 0.0005 to 0.1, more particularly from 0.001 to 0.04;
f) the weight ratio of the formaldehyde releasers to the microcapsules is from 0.0001 to 0.04, more particularly from 0.0005 to 0.02;
g) the weight ratio of the nitrogen-containing compound, more particularly isothiazolinones and alkaloids to the microcapsules, is from 0.000005 to 0.00004, more particularly from 0.00001 to 0.00002;
h) the weight ratio of the surfactant to the microcapsules is from 0.001 to 0.2, more particularly from 0.01 to 0.1;
i) the weight ratio of the quaternized or protonated amines to the microcapsules is from 0.0005 to 0.05, more particularly from 0.001 to 0.02;

wherein the weight of the microcapsules as used herein is based on the solids content of the microcapsule composition.

3. The composition according any of the preceding claims, wherein the at least one preservation agent is selected from at least one of b) to f), is non-ionic and has a ClogP of 1.0 or less, more particularly 0.5 or less, still more particularly 0.0 or less, still more particularly -0.5 or less.

4. The composition according to any of the preceding claims, wherein the at least one preservation agent is a diol, more particularly a 1,2-alkyldiol, such as 1,2-propanediol, 1,2-butanediol, 1,2-pentanediol and 1,2-hexanediol.

5. The composition according to any of the preceding claims, wherein the at least one preservation agent is a conjugate acid-base pair derived from a weak acid or from the salt of a weak acid, wherein the protonated weak acid has a ClogP of 1.00 or less, more particularly 0.50 or less, still more particularly 0.00 or less, still more particularly -0.50 or less.

6. A composition according to claim 5, wherein the conjugate acid-base pair is derived from a weak acid selected from the group consisting of ascorbic acid, citric acid, malic acid, lactic acid, glycolic acid; levulinic acid, gluconic acid, phytic acid, glutamic acid N,N-diacetic acid (GLDA), ethylenediaminetetraacetic acid (EDTA), hydroxymethyl amino acetic acid.

7. The composition according to claims 5 or 6, wherein the conjugate acid-base pair is derived from the lithium, sodium, potassium or ammonium salt of a weak acid.

8. A composition according to any of the preceding claims, wherein the at least one preservation agent is selected from one or more of the following combinations: i) lactic acid and potassium sorbate, ii) lactic acid and sodium benzoate, iii) 1,2-alkanediol having a ClogP value of less than 1 and phenoxyethanol, iv) gluconic acid and potassium sorbate, and v) 1,2-alkanediol, dehydroacetic acid, benzyl alcohol and phenoxyethanol.

9. A composition according to any of the preceding claims, wherein the pH of the aqueous phase of the composition is 2 to 9, more particularly 3 to j8.

10. A composition according to any one of the preceding claims, wherein the biodegradable encapsulating material comprises at least one biopolymer selected from the group consisting of polysaccharides, modified polysaccharides, polyphenolic compounds, proteins, modified proteins and mixture thereof.

11. A composition according to any one of the preceding claims wherein the microcapsule is a core-shell microcapsule comprising a core comprising a functional material and a shell encapsulating the core, the shell comprising a biodegradable encapsulating material.

**12.** A composition according to any of the preceding claims, wherein the biodegradable encapsulating material is a complex coacervate formed of at least one cationic biodegradable polymer and at least one anionic biodegradable polymer.

**13.** A composition according to any of the preceding claims, wherein the at least one encapsulated functional material is a fragrance composition, a flavour composition or a cosmetic active ingredient.

**14.** A composition according to any of the preceding claims, wherein the at least one encapsulated functional material is biodegradable.

**15.** A composition according to any of the preceding claims, wherein the water content of the composition is from 1 to 99 wt.-%, more particularly 3 to 70 wt.-%.

**16.** A composition according to any of the preceding claims, wherein the composition is in the form of a slurry, a cake or an extrudate.

**17.** The use of an anti-microbial preservation system according to any of claims 1 to 8, to prevent or reduce the premature leakage of functional material from a microcapsule composition comprising a biodegradable encapsulating material.

**18.** A method of reducing or eliminating the leakage during transportation and storage of encapsulated functional material from a microcapsule composition comprising a biodegradable encapsulating material, said method comprising the step of adding an anti-microbial preservation system according to any of claims 1 to 8 to said composition.

**19.** The method according to claim 18, wherein:

a) the weight ratio of the added carboxylic and hydroxycarboxylic acids and their conjugate bases to the microcapsules is from 0.0005 to 0.4, more particularly from 0.001 to 0.2.
b) the weight ratio of the added hydroxy esters, such as lactic acid monoesters, to the microcapsules is from 0.0001 to 0.02, more particularly from 0.0005 to 0.004;
c) the weight ratio of the added alcohols and polyols, more particularly diols, still more particularly 1,2-diols, and mixtures thereof to the microcapsules is from 0.001 to 0.4, more particularly from 0.005 to 0.2;
d) the weight ratio of the added hydroxypyrones and hydroxylactones to microcapsules is from 0.0005 to 0.1, more particularly from 0.001 to 0.04;
e) the weight ratio of the added phenols, phenolic derivatives and polyphenols to the micorcapsules is from 0.0005 to 0.1, more particularly from 0.001 to 0.04;
f) the weight ratio of the added formaldehyde releasers to the microcapsules is from 0.0001 to 0.04, more particularly from 0.0005 to 0.02;
g) the weight ratio of the added nitrogen-containing compound, more particularly isothiazolinones and alkaloids to the microcapsules is from 0.000005 to 0.00004, more particularly from 0.00001 to 0.00002;
h) the weight ratio of the added surfactant to the microcapsules is from 0.001 to 0.2, more particularly from 0.01 to 0.1; and
i) the weight ratio of the added quaternized or protonated amines to the microcapsules is from 0.0005 to 0.05, more particularly from 0.001 to 0.02.

**20.** A microcapsule composition obtainable by the method according to claim 18.

**21.** A consumer product comprising a microcapsule composition according to any of claims 1 to 17, and 20.

**22.** A consumer product according to claim 19 selected from the group consisting of a laundry care detergent, a laundry care conditioners, a fabric refresher, a scent booster, a personal care cleansing composition, such as a shampoo, a bath or a shower gels, a liquid soap, a soap bar, a personal care conditioning composition, such as a hair care conditioner, a bath or a shower lotion, a deodorant compositions, an antiperspirant compositions, a home care composition, such as a hard surface cleaner, or a heavy duty detergent.

Europäisches Patentamt
European Patent Office
Office européen des brevets

# EUROPEAN SEARCH REPORT

Application Number
EP 22 18 6452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/028705 A1 (SYMRISE AG [DE]) 10 February 2022 (2022-02-10) | 1,3,4, 9-11, 13-16, 20-22 | INV. A01N25/28 A01N31/02 A01N31/14 A01N37/10 A01N37/36 A01P1/00 |
| Y | * paragraphs [0128] - [0149], [0254] - [0255] * * examples 1-5 * * claims 1-5, 14-16 * ----- | 1-22 | |
| X | RU 2 134 967 C1 (SHESTAKOV KONSTANTIN ALEKSEEVI; LEVI MOISEJ IOSIFOVICH ET AL.) 27 August 1999 (1999-08-27) | 1-3,9, 11,14, 16,20,21 | |
| Y | * page 4, column 1, line 5 - line 9 * * examples 1-13 * * claim 1 * ----- | 1-22 | |
| X | WO 2021/122636 A1 (FIRMENICH & CIE [CH]) 24 June 2021 (2021-06-24) | 1,3-6, 9-11, 13-16, 20-22 | |
| Y | * examples 1, 2, 4, 6, 8 * ----- | 1-22 | TECHNICAL FIELDS SEARCHED (IPC) |
| X | US 2022/008886 A1 (LEI YABIN [US] ET AL) 13 January 2022 (2022-01-13) | 1,3-6, 9-11, 13-16, 20-22 | A01N |
| Y | * paragraphs [0011] - [0013], [0106] - [0107] * * examples 2-9 * * claims 1-16 * ----- | 1-22 | |

The present search report has been drawn up for all claims

1

| Place of search | Date of completion of the search | Examiner |
|---|---|---|
| Munich | 1 February 2023 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 18 6452

This annex lists the patent family members relating to the patent documents cited in the above-mentioned European search report. The members are as contained in the European Patent Office EDP file on
The European Patent Office is in no way liable for these particulars which are merely given for the purpose of information.

01-02-2023

| Patent document cited in search report | Publication date | Patent family member(s) | Publication date |
|---|---|---|---|
| WO 2022028705 A1 | 10-02-2022 | EP 3969164 A1 | 23-03-2022 |
| | | WO 2022028705 A1 | 10-02-2022 |
| | | WO 2022029490 A1 | 10-02-2022 |
| RU 2134967 C1 | 27-08-1999 | NONE | |
| WO 2021122636 A1 | 24-06-2021 | BR 112022007882 A2 | 05-07-2022 |
| | | CN 114867833 A | 05-08-2022 |
| | | EP 4077626 A1 | 26-10-2022 |
| | | US 2023022488 A1 | 26-01-2023 |
| | | WO 2021122636 A1 | 24-06-2021 |
| US 2022008886 A1 | 13-01-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020131855 A
- WO 2020131866 A
- WO 2020131875 A
- WO 2020131879 A
- WO 2020131956 A
- WO 2020209908 A
- WO 2020209907 A
- WO 2020209909 A
- WO 2019179939 A
- WO 2019243425 A
- WO 2019243426 A
- WO 2016185171 A
- US 20150164117 A
- WO 2016193435 A
- US 20170360676 A
- WO 2020233887 A
- WO 1996020612 A1
- WO 200103825 A1
- WO 2015150370 A1
- US 6045835 A
- WO 2021239742 A1

### Non-patent literature cited in the description

- *CHEMICAL ABSTRACTS,* 39236-46-9
- *CHEMICAL ABSTRACTS,* 78491-02-8
- *CHEMICAL ABSTRACTS,* 6440-58-0
- *CHEMICAL ABSTRACTS,* 52-51-7
- *CHEMICAL ABSTRACTS,* 30007-47-7
- *CHEMICAL ABSTRACTS,* 4080-31-3
- *CHEMICAL ABSTRACTS,* 8001-54-5
- *CHEMICAL ABSTRACTS,* 100-97-0